# EUROPEAN PATENT APPLICATION

(11) **EP 4 079 784 A1**
(43) Date of publication of application: **26.10.2022**
(21) Application number: 21169518.4
(22) Date of filing: 20.04.2021
(51) Int. Cl.: C08G 65/00, B32B 27/38, C08G 65/48, C08L 71/12

(54) **PHENYLENE ETHER OLIGOMER AND CURABLE THERMOSETTING COMPOSITION COMPRISING THE PHENYLENE ETHER OLIGOMER**

(71) Applicant: SHPP Global Technologies B.V., 4612 PX Bergen op Zoom (NL)
(72) Inventor: Tarkin-Tas, Eylem, Selkirk, NY New York 12158 (US); Dhahir, Yasser, Selkirk, NY New York 12158 (US)
(74) Representative: Balder IP Law, S.L.

(57) **Abstract**

A linear bifunctional phenylene ether oligomer includes repeating units derived from 2-methyl-6-cyclohexylphenol and has (meth)acrylate end groups. The linear bifunctional phenylene ether oligomer can be particularly useful in curable compositions, thermoset compositions, and articles formed therefrom.

## Description

### BACKGROUND

This disclosure relates to an end-capped phenylene ether oligomer, a method of forming the same, a curable thermosetting composition including the same, and articles derived therefrom.

Thermosetting resins are materials that cure to form extremely hard plastics. These materials that can be used in a wide variety of consumer and industrial products. For example, thermosets are used in protective coatings, adhesives, electronic laminates (such as those used in the fabrication of computer circuit boards), flooring, and paving applications, glass fiber-reinforced pipes, and automotive parts (including leaf springs, pumps, and electrical components). Poly(arylene ether) copolymers generally have good dielectric properties. Because of their broad use, particularly in electronic applications, such as laminates for printed circuit boards, it is desirable to provide curable thermosetting compositions including poly(arylene ether) copolymers with a lower viscosity while maintaining or improving the dielectric constant, dissipation factor, heat resistance, and water absorption.

There accordingly remains a need in the art for end-capped arylene ether polymers and oligomers that have a desirable set of properties for use in curable thermosetting compositions. It would be a further advantage if the capped arylene ether materials could provide curable thermosetting compositions having improved dielectric constant, dissipation factor, heat resistance, and water absorption.

### SUMMARY

Provided is a linear bifunctional phenylene ether oligomer comprising repeating units derived from 2-methyl-6-cyclohexylphenol and having (meth)acrylate end groups.

Also provided is a process for forming the linear bifunctional phenylene ether oligomer including oxidatively polymerizing 2-methyl-6-cyclohexyl phenol in the presence of a catalyst to provide a phenylene ether oligomer; and reacting the phenylene ether oligomer with a (meth)acrylate-containing compound to provide the linear bifunctional phenylene ether oligomer.

Further provided is a curable thermosetting composition comprising the linear bifunctional phenylene ether oligomer and an article derived from the curable thermosetting composition.

The above described and other features are exemplified by the following detailed description.

### DETAILED DESCRIPTION

The present inventors have advantageously discovered that a phenylene ether oligomer derived from 2-methyl-6-cyclohexylphenol and end-capped with (meth)acrylate groups can be included in curable thermosetting compositions to achieve improved properties over thermosetting compositions that include a phenylene ether oligomer without repeating units derived from 2-methyl-6-cyclohexylphenol. For example, a phenylene ether oligomer derived from 2-methyl-6-cyclohexylphenol can provide an improved combination of properties, such as solution viscosity, dissipation factor, resin flow, and dielectric constant.

Accordingly, an aspect of the present disclosure is a linear bifunctional phenylene ether oligomer comprising repeating units derived from 2-methyl-6-cyclohexylphenol. The phenylene ether oligomer therefore comprises repeating units having the structure

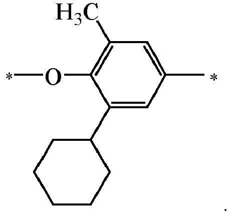

The oligomer can consist of the above repeating units derived from 2-methyl-6-cyclohexylphenol or can comprise repeating units derived from a monohydric phenol different from 2-methyl-6-cyclohexylphenol. When the oligomer comprises additional repeating units, the phenylene ether oligomer comprises less than 30 weight percent (based on the total weight of the phenylene ether oligomer) of repeating units derived from a monohydric phenol having identical substituents in the 2- and 6- positions (e.g., 2,6-dimethylphenol, 2,3,6-dimethylphenol, and the like, or combinations thereof). Preferably, the phenylene ether oligomer comprises less than 20, or less than 15, or less than 10, or less than 5, or less than 2, or less than 1, or less than 0.5 or less than 0.1 weight percent of repeating units derived from a monohydric phenol having identical substituents in the 2- and 6- positions. The oligomer can comprise no repeating units derived from a monohydric phenol having identical substituents in the 2- and 6- positions. In an aspect, the phenylene ether oligomer of the present disclosure excludes repeating units derived from 2-cyclohexylphenol.

The phenylene ether oligomer further comprises (meth)acrylate end groups. The phenylene ether oligomer therefore has end groups having the structure 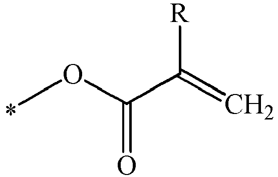 wherein R is hydrogen or methyl. In an aspect, R is a methyl group, and the phenylene ether oligomer comprises methacrylate end groups. In an aspect, R is hydrogen and the phenylene ether oligomer comprises acrylate end groups.

The phenylene ether oligomer has a linear architecture and is bifunctional. "Bifunctional" as used herein means that the phenylene ether oligomer has functional groups at both termini of the oligomer chain. Bifunctional oligomers with functional groups at both termini of an oligomer chain are also referred to as "telechelic" oligomers. The phenylene ether oligomer therefore has, on average, 2 functional end groups (i.e., (meth)acrylate groups) per oligomer chain. For example, the bifunctional oligomer has at least 1.5 to 2, or at least 1.70 to 2, or at least 1.8 to 2, or at least 1.9 to 2, or at least 1.95 to 2 (meth)acrylate groups per molecule, or up to 1.99 (meth)acrylate groups per molecule.

In an aspect, the phenylene ether oligomer is of the structure 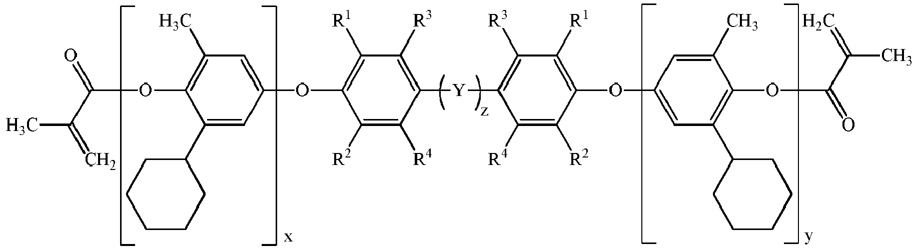 wherein R¹ and R² are each independently halogen, unsubstituted or substituted C₁-₁₂ primary or secondary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms; each occurrence of R³ and R⁴ are each independently hydrogen, halogen, unsubstituted or substituted C₁-₁₂ primary or secondary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms; x and y are independently 0 to 30, preferably 0 to 20, more preferably 0 to 15, still more preferably 0 to 10, even more preferably 0 to 8, provided that the sum of x and y is at least 2, preferably at least 3, more preferably at least 4; and Y has a structure comprising 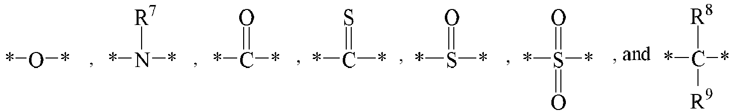 wherein each occurrence of R⁷ is independently hydrogen or C₁-₁₂ hydrocarbyl, and each occurrence of R⁸ and R⁹ is independently hydrogen, C₁-₁₂ hydrocarbyl, or C₁-₆ hydrocarbylene wherein R⁸ and R⁹ collectively form a C₄-₁₂ alkylene group; and z is 0 or 1.

In an aspect, the phenylene ether oligomer is of the structure 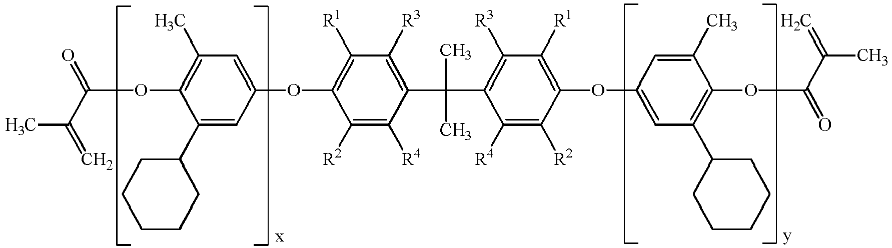 wherein R¹-R⁴ are as defined above.

In an aspect, the phenylene ether oligomer is of the structure 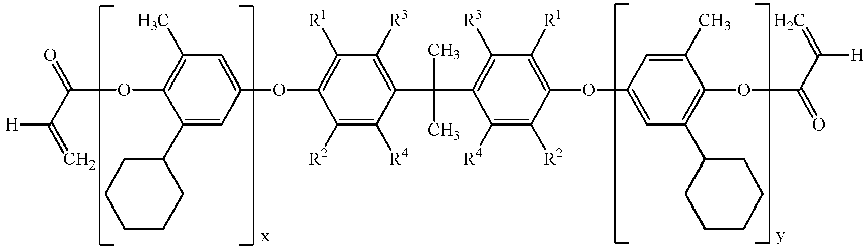 wherein R¹-R⁴ are as defined above.

In an aspect, each occurrence of R¹ and R² is methyl, each occurrence of R³ and R⁴ is hydrogen, z is 1, and Y is an isopropylidene group, and the phenylene ether oligomer is of the structure

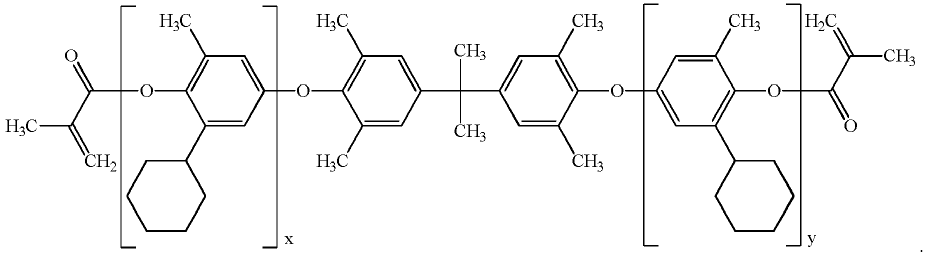

In an aspect, each occurrence of R¹ and R² is methyl, each occurrence of R³ and R⁴ is hydrogen, z is 1, and Y is an isopropylidene group, and the phenylene ether oligomer is of the structure

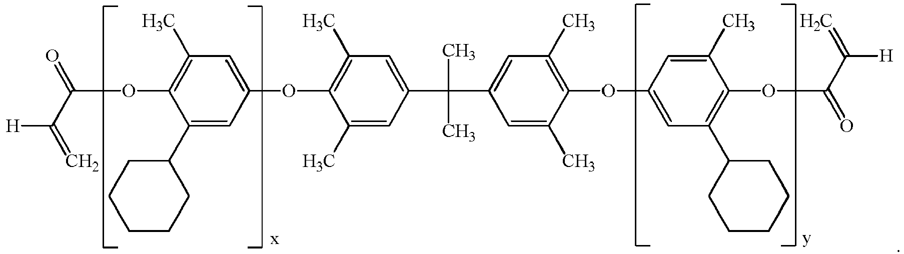

The phenylene ether oligomer of the present disclosure can be made by oxidatively polymerizing 2-methyl-6-cyclohexyl phenol in the presence of a catalyst to provide the phenylene ether oligomer. The phenylene ether oligomer can be formed by polymerization of monomers comprising 2-methyl-6-phenylphenol and a dihydric phenol by continuous addition of oxygen to a reaction mixture comprising the monomers, solvent, and polymerization catalyst.

The dihydric phenol has the structure 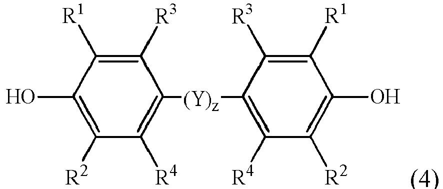 wherein R¹ to R⁴, Y¹, and z are as defined above.

For example, the dihydric phenol can be 1,1-bis(3,5-dimethyl-4-hydroxyphenyl) ethane, 1,1-bis(3-chloro-4-hydroxyphenyl)ethane, 1,1-bis(3-methyl-4-hydroxyphenyl)-ethane, 1,2-bis(4-hydroxy-3,5-dimethylphenyl)-1,2-diphenylethane, 1,2-bis(3-methyl-4-hydroxyphenyl) - 1,2-diphenylethane, 1,2-bis(3-methyl-4-hydroxyphenyl)ethane, 2,2'-binaphthol, 2,2'-biphenol, 2,2'-dihydroxy-4,4'-dimethoxybenzophenone, 2,2'-dihydroxy-4-methoxybenzo-phenone, 2,2'-dihydroxybenzophenone, 2,2-bis(3,5-dichloro-4-hydroxyphenyl)propane, 2,2-bis(3-bromo-4-hydroxyphenyl)propane, 2,2-bis(3-phenyl-4-hydroxyphenyl)propane, 2,2-bis(3-methyl-4-hydroxyphenyl)propane, 2,2-bis(3,5-dimethyl-4-hydroxyphenyl)propane, 1,1-bis(3,5-dimethyl-4-hydroxyphenyl)-1-phenylethane, 1,1-bis(3-chloro-4-hydroxyphenyl)-1-phenylethane, 1,1-bis(3-methyl-4-hydroxyphenyl)-1-phenylethane, 2,2-bis(4-hydroxy-3,5-dimethyl phenyl)-1-phenylpropane, 2,2-bis(4-hydroxy-3,5-dimethyl phenyl)hexane, 2,2-bis(4-hydroxy-3,5-dimethylphenyl)pentane, 2,2-bis(3-methyl-4-hydroxynaphthyl)propane, 2,2-bis(3-methyl-4-hydroxyphenyl)-1-phenylpropane, 2,2-bis(3-methyl-4-hydroxyphenyl)hexane, 2,2-bis(3-methyl-4-hydroxyphenyl)pentane, 2,2'-methylenebis(4-methylphenol), 2,2'-methylenebis[4-methyl-6-(1-methylcyclohexyl)phenol], 3,3',5,5'-tetramethyl-4,4'-biphenol, 3,3'-dimethyl-4,4'-biphenol, bis(2-hydroxyphenyl)-methane, bis(4-hydroxy-2,6-dimethyl-3-methoxyphenyl)methane, bis(3,5-dimethyl-4-hydroxyphenyl)methane, bis(3-methyl-4-hydroxyphenyl)methane, bis-(4-hydroxy-3,5-dimethyl phenyl)-cyclohexylmethane, bis(4-hydroxy-3,5-dimethyl phenyl)phenylmethane, bis(3-methyl-4-hydroxyphenyl)cyclohexylmethane, bis(3-methyl-4-hydroxyphenyl)methane, bis(3,5-dimethyl-4-hydroxyphenyl)methane, bis(3-methyl-4-hydroxyphenyl)phenylmethane, 2,2',3,3',5,5'-hexamethyl-4,4'-biphenol, octafluoro-4,4'-biphenol, 2,3,3',5,5'-pentamethyl-4,4'-biphenol, 1,1-bis(3,5-dibromo-4-hydroxyphenyl)cyclohexane 1,1-bis(3,5-dimethyl-4-hydroxyphenyl)cyclohexane, bis(3-methyl-4-hydroxyphenyl)cyclohexane, tetrabromobisphenol, tetrabromobisphenol A, tetrabromobisphenol S, 2,2'-diallyl-4,4'-bisphenol A, 2,2'-diallyl-4,4'-bisphenol S, 3,3',5,5'-tetramethyl-4,4'-bisphenol sulfide, 3,3'-dimethyl bisphenol sulfide, 3,3',5,5'-tetramethyl-4,4'-bisphenol sulfone, or a combination thereof

The molecular oxygen (O₂) can be provided as air or pure oxygen. The polymerization catalyst is a metal complex comprising a transition metal cation. The metal cation can include ions from Group VIB, VIIB, VIIIB, or IB of the periodic table, or a combination thereof. Of these, chromium, manganese, cobalt, copper, and combinations comprising at least one of the foregoing ions can be used. In an aspect, the metal ion is a copper ion (Cu⁺ and Cu²⁺). Metal salts which can serve as sources of metal cations include cuprous chloride, cupric chloride, cuprous bromide, cupric bromide, cuprous iodide, cupric iodide, cuprous sulfate, cupric sulfate, cuprous tetraamine sulfate, cupric tetraamine sulfate, cuprous acetate, cupric acetate, cuprous propionate, cupric butyrate, cupric laurate, cuprous palmitate, cuprous benzoate, and the corresponding manganese salts and cobalt salts. Instead of use of any of the above-exemplified metal salts, it is also possible to add a metal or a metal oxide and an inorganic acid, organic acid or an aqueous solution of such an acid and form the corresponding metal salt or hydrate *in situ.* For example, cuprous oxide and hydrobromic acid can be added to generate cuprous bromide *in situ.*

The polymerization catalyst further comprises at least one amine ligand. The amine ligand can be, for example, a monoamine, an alkylene diamine, or a combination comprising at least one of the foregoing. Monoamines include dialkylmonoamines (such as di*n*-butylamine, or DBA) and trialkylmonoamines (such as N,N-dimethylbutylamine, or DMBA). Diamines include alkylenediamines, such as N,N'-di-*tert*-butylethylenediamine, or DBEDA. Suitable dialkylmonoamines include dimethylamine, di-*n*-propylamine, di-*n*-butylamine, di*-sec-*butyl amine, di-*tert*-butylamine, dipentylamine, dihexylamine, dioctylamine, didecylamine , dibenzylamine, methylethylamine, methylbutylamine, dicyclohexylamine, N-phenylethanolamine, N-(*p*-methyl)phenylethanolamine, N-(2,6-dimethyl)phenylethanolamine, N-(*p*-chloro)phenylethanolamine, N-ethylaniline, N-butyl aniline, N-methyl-2-methylaniline, N-methyl-2,6-dimethylaniline, diphenylamine, and the like, or a combination thereof. Suitable trialkylmonoamines include trimethylamine, triethylamine, tripropylamine, tributylamine, butyldimethylamine, phenyldiethylamine, and the like, or a combination thereof.

Suitable alkylenediamines include those having the formula:

(R^{d})₂N-R^{c}-N(R^{d})₂

wherein R^{c} is a substituted or unsubstituted divalent residue; and each R^{d} is independently hydrogen or C₁-₈ alkyl. In some examples, of the above formula, two or three aliphatic carbon atoms form the closest link between the two diamine nitrogen atoms. Specific alkylenediamine ligands include those in which R^{c} is dimethylene (-CH₂CH₂-) or trimethylene (-CH₂CH₂CH₂-). R^{d} can be independently hydrogen, methyl, propyl, isopropyl, butyl, or a C₄-₈ alpha-tertiary alkyl group. Examples of alkylenediamine ligands include N,N,N',N' tetramethylethylene diamine (TMED), N,N'-di-tert-butylethylenediamine (DBEDA), N,N,N',N'-tetramethyl-1,3-diaminopropane (TMPD), N-methyl-1,3-diaminopropane, N,N'-dimethyl-1,3-diaminopropane, N,N,N'-dimethyl-1,3-diaminopropane, N-ethyl-1,3-diaminopropane, N-methyl-1,4-diaminobutane, N,N'-trimethyl-1,4-diaminobutane, N,N,N'-trimethyl-1,4-diaminobutane,N,N,N',N'-tetramethyl-1,4-diaminobutane, N,N,N',N'-tetramethyl-1,5-diaminopentane, or a combination thereof. In an aspect, the amine ligand is di-*n*-butylamine (DBA), N,N-dimethylbutylamine (DMBA), *N,N'-*di*-tert-*butylethylenediamine (DBEDA), or combinations thereof. The catalyst can be prepared *in situ* by mixing a metal ion source (e.g., cuprous oxide and hydrobromic acid) and amine ligands. In an aspect, the polymerization catalyst comprises copper ion, bromide ion, and *N,N'-*di*-tert-*butylethylenediamine.

The method of making the functionalized phenylene ether oligomer further comprises reacting the phenylene ether oligomer (e.g., the "uncapped" hydroxyl-terminated phenylene ether oligomer) with a compound comprising a (meth)acrylate group to provide the functionalized phenylene ether oligomer. For example, the method can comprise reacting a hydroxyl-terminated phenylene ether oligomer with a (meth)acryloyl chloride. The reaction between the phenylene ether oligomer and the compound comprising a (meth)acrylate group can be in a solvent. In some aspect, the phenylene ether oligomer can be obtained as a powder that is subsequently combined with the compound comprising a (meth)acrylate group and a solvent. In other aspects, the uncapped phenylene ether oligomer can be obtained as a solution from the oxidative polymerization reaction without removing the solvent, and the uncapped phenylene ether oligomer is not isolated as a powder from the solvent solution. For example, the compound comprising a (meth)acrylate group can be added directly to a solution of the uncapped phenylene ether oligomer that is directly obtained from oxidatively polymerizing the 2-methyl-6-cyclohexylphenol and the dihydric phenol in a solvent, wherein the solvent is not removed from the reaction product before reacting with the compound comprising a (meth)acrylate group. An exemplary synthesis is further described in the working examples below. Suitable compounds comprising the (meth)acrylate group and a group reactive toward the hydroxyl-terminated phenylene ether oligomer can be readily determined by one skilled in the art.

The phenylene ether oligomer can have a number average molecular weight (Mn) of 600 to 5,000 grams per mole, for example 600 to 3,500 grams per mole, or 1,000 to 5,000 grams per mole, or 1,000 to 3,500 grams per mole. Number average molecular weight can be determined by, for example, gel permeation chromatography relative to polystyrene standards.

The phenylene ether oligomer of the present disclosure can have an intrinsic viscosity of less than 0.15 deciliter per gram, or 0.02 to 0.15 deciliter per gram, or 0.03 to 0.10 deciliter per gram, or 0.035 to 0.075 deciliter per gram. Intrinsic viscosity can be measured by Ubbelohde viscometer at 25°C in chloroform.

Also provided is a curable thermosetting composition including the linear bifunctional phenylene ether oligomer having (meth)acrylate end groups. For example, the bifunctional phenylene ether oligomer can be present in the curable thermosetting composition in an amount of 1 to 95 weight percent (wt%), or 5 to 95 wt%, or 10 to 85 wt%, or 20 to 80 wt%, 30 to 70 wt%, or 5 to 30 wt%, or 5 to 15 wt%, based on the total weight of the curable thermosetting composition.

The curable thermosetting composition can further include one or more of a crosslinking agent, a curing agent, a curing catalyst, a curing initiator, or a combination thereof. In some aspects, the curable thermosetting composition can further include one or more of a flame retardant, a filler, a coupling agent, or a combination thereof. For example, the curable thermosetting composition can include one or more of a crosslinking agent, a curing agent, a curing catalyst, a curing initiator, or a combination thereof; and can further include one or more of a flame retardant, a filler, a coupling agent, or a combination thereof.

There is considerable overlap among thermosetting resins, crosslinking agents, and coupling agents. As used herein, the term "crosslinking agent" includes compounds that can be used as thermosetting resins, crosslinkers, coupling agents, or a combination thereof. For example, in some instances a compound that is a thermosetting resin could also be used as a crosslinking agent, a coupling agent, or both.

The thermosetting resins are not particularly limited, and thermosetting resins can be used alone or in combinations of two or more thermosetting resins (e.g., including one or more auxiliary thermosetting resins). Exemplary thermosetting resins include epoxy resins, cyanate ester resins, (bis)maleimide resins, (poly)benzoxazine resins, vinyl resins (e.g., a vinyl benzyl ether resin), phenolic resins, alkyd resins, unsaturated polyester resins, arylcyclobutene resins, perfluorovinyl ether resins, monomers, oligomers or polymers with curable unsaturation (e.g., a vinyl functionality), or the like, or a combination thereof.

The epoxy resin can generally be any epoxy resin that is suitable for use in thermosetting resins. The term "epoxy resin" in this context refers to a curable composition of oxirane ring-containing compounds as described in, for example, C. A. May, Epoxy Resins, 2.sup.nd Edition, (New York & Basle: Marcel Dekker Inc.), 1988. The epoxy resins can include bisphenol A type epoxy resins such as those obtained from bisphenol A and resins obtained by substituting at least one position of the 2-position, the 3-position and the 5-position of bisphenol A with a halogen atom, an alkyl group having 6 or less carbon atoms or a phenyl group; bisphenol F type epoxy resins such as those obtained from bisphenol F and a resin obtained by substituting at least one position of the 2-position, the 3-position and the 5-position of bisphenol F with a halogen atom, an alkyl group having 6 or less carbon atoms or a phenyl group; glycidyl ether compounds derived from bivalent or tri- or more-valent phenols such as hydroquinone, resorcinol, tris-4-(hydroxyphenyl)methane and 1,1,2,2-tetrakis(4-hydroxyphenyl)ethane; a novolak type epoxy resin derived from a novolak resin which is a reaction product between phenols such as phenol and o-cresol and formaldehyde, including bisphenol A novolak type epoxy resins and cresol novolak type epoxy resins; cyclic aliphatic epoxy compounds such as 2,2-bis(3,4-epoxycyclohexyl)propane, 2,2-bis[4-(2,3-epoxypropyl)cyclohexyl]propane, vinylcyclohexene dioxide, 3,4-epoxycyclohexylmethyl-3,4-epoxycyclohexane carboxylate; dicyclopentadiene-containing polyepoxides; amine type epoxy resins derived from aniline, p-aminophenol, m-aminophenol, 4-amino-m-cresol, 6-amino-m-cresol, 4,4'-diaminodiphenyl-ethane, 3,3'-diaminodiphenylmethane, 4,4'-diaminodiphenyl ether, 3,4'-diaminodiphenylether, 1,4-bis(4-aminophenoxy)benzene, 1,4-bis(3-aminophenoxy)-benzene, 1,3-bis(4-aminophenoxy)-benzene, 1,3-bis(3-aminophenoxy)benzene, 2,2-bis(4-amino-phenoxyphenyl)propane, p-phenylenediamine, m-phenylenediamine, 2,4-toluenediamine, 2,6-toluenediamine, p-xylylenediamine, m-xylylenediamine, 1,4-cyclohexane-bis(methylamine), 5-amino-1-(4'-aminophenyl)-1,3,3-trimethylindane, 6-amino-1-(4'-aminophenyl)-1,3,3-trimethyl-indane or the like; heterocyclic epoxy compounds, and glycidyl ester type epoxy compounds, for example, those derived from glycidyl ester of aromatic carboxylic acids such as p-oxybenzoic acid, m-oxybenzoic acid, terephthalic acid, and isophthalic acid. An "epoxy resin" can also include reaction products of compounds containing two or more epoxy groups and aromatic dihydroxy compounds, which can be optionally halogen-substituted and can be used alone or in a combination of two or more.

Cyanate esters are not limited, and any resin composed of cyanate ester monomers, which polymerize to form a polymer containing a plurality of cyanate ester (-OCN) functional groups can be used. Cyanate ester monomers, prepolymers (i.e., partially polymerized cyanate ester monomers or blends of cyanate ester monomers), homopolymers, and copolymers made using cyanate ester precursors, and combinations of these compounds. For example, cyanate esters can be prepared according to methods as disclosed in "Chemistry and Technology of Cyanate Ester Resins", by Ian Hamerton, Blackie Academic and Professional; U.S. Pat. No. 3,553,244, and JP-A-7-53497. Exemplary cyanate ester resins include 2,2-bis(4-cyanatophenyl)-propane, bis(4-cyanatophenyl)ethane, bis(3,5-dimethyl-4-cyanatophenyl)methane, 2,2-bis(4-cyanatophenyl)-1,1,1,3,3,3-hexafluoropropane, α,α'-bis(4-cyanatophenyl)-m-diisopropylbenzene, cyanate ester resins prepared from dicyclopentadiene-phenol copolymers, and prepolymers prepared from these monomers. An example of a prepolymer is PRIMASET BA-230S (Lonza). The cyanate ester prepolymers can be homopolymers or can be copolymers that incorporate other monomers. Examples of such copolymers include BT resins available from Mitsubishi Gas Chemical, such as, BT 2160 and BT2170, which are prepolymers made with cyanate ester monomers and bismaleimide monomers. Other cyanate esters polymers, monomers, prepolymers, and blends of cyanate ester monomers with other non-cyanate ester monomers are disclosed in US 7393904, US 7388057, US 7276563, and US 7192651.

Bismaleimide resins can be produced by reaction of a monomeric bismaleimide with a nucleophile such as a diamine, aminophenol, or amino benzhydrazide, or by reaction of a bismaleimide with diallyl bisphenol A. Exemplary bismaleimide resins include 1,2-bismaleimidoethane, 1,6-bismaleimidohexane, 1,3-bismaleimidobenzene, 1,4-bismaleimidobenzene, 2,4-bismaleimidotoluene, 4,4'-bismaleimidodiphenylmethane, 4,4'-bismaleimido-diphenylether, 3,3'-bismaleimidodiphenylsulfone, 4,4'-bismaleimido-diphenylsulfone, 4,4'-bismaleimidodicyclohexylmethane, 3,5-bis(4-maleimidophenyl)pyridine, 2,6-bismaleimidopyridine, 1,3-bis(maleimidomethyl)cyclohexane, 1,3-bis(maleimidomethyl)benzene, 1,1-bis(4-maleimidophenyl)cyclohexane, 1,3-bis(dichloromaleimido)benzene, 4,4'-bis(citraconimido)diphenylmethane, 2,2-bis(4-maleimidophenyl)propane, 1-phenyl-1,1-bis(4-maleimidophenyl)ethane, N,N-bis(4-maleimidophenyl)toluene, 3,5-bismaleimido-1,2,4-triazole N,N'-ethylenebismaleimide, N,N'-hexamethylenebismaleimide, N,N'-m-phenylene-bismaleimide, N,N'-p-phenylenebismaleimide, N,N'-4,4'-diphenylmethanebismaleimide, N,N'-4,4'-diphenyl-etherbismaleimide, N,N'-4,4'-diphenylsufonebismaleimide, N,N'-4,4'-dicyclohexylmethanebismaleimide, N,N'-α,α'-4,4'-dimethylenecyclohexanebismaleimide, N,N'-m-methaxylene-bismaleimide, N,N'-4,4'-diphenylcyclohexanebismaleimide, and N,N'-methylene-bis(3-chloro-p-phenylene)bismaleimide, as well as those disclosed in US 3,562,223; US 4,211,860; and US 4,211,861, or as prepared by methods as described, for example, in US 3,018,290.

The benzoxazine compounds have a benzoxazine ring in the molecule. Exemplary benzoxazine monomers can be prepared from the reaction of aldehydes, phenols, and primary amines with or without solvent. The phenolic compounds for forming benzoxazines include phenols and polyphenols. The use of polyphenols with two or more hydroxyl groups reactive in forming benzoxazines can result in branched, crosslinked, or a combination of branched and crosslinked products. The groups connecting the phenolic groups into a phenol can be branch points or connecting groups in the polybenzoxazine.

Exemplary phenols for use in the preparation of benzoxazine monomers include phenol, cresol, resorcinol, catechol, hydroquinone, 2-allylphenol, 3-allylphenol, 4-allylphenol, 2,6-dihydroxynaphthalene, 2,7-dihydrooxynapthalene, 2-(diphenyl-phosphoryl)hydroquinone, 2,2'-biphenol, 4,4-biphenol, 4,4'-isopropylidenediphenol, 4,4'-isopropylidenebis(2-methylphenol), 4,4'-isopropylidenebis(2-allylphenol), 4,4'(1,3-phenylenediisopropylidene)bisphenol (bisphenol M), 4,4'-isopropylidenebis(3-phenylphenol) 4,4'-(1,4-phenylenediisoproylidene)-bisphenol, 4,4'-ethylidenediphenol, 4,4'-oxydiphenol, 4,4'-thiodiphenol, 4,4'-sufonyldiphenol, 4,4'-sulfinyldiphenol, 4,4'-hexafluoroisopropylidene)bisphenol, 4,4'(1-phenylethylidene)-bisphenol, bis(4-hydroxyphenyl)-2,2-dichloroethylene, bis(4-hydroxyphenyl)methane, 4,4'-(cyclopentylidene)diphenol, 4,4'-(cyclohexylidene)diphenol, 4,4'-(cyclododecylidene)diphenol 4,4'-(bicyclo[2.2.1]heptylidene)diphenol, 4,4'-(9H-fluorene-9,9-diyl)diphenol, isopropylidene-bis(2-allylphenol), 3,3-bis(4-hydroxyphenyl)isobenzofuran-1(3H)-one, 1-(4-hydroxyphenyl)-3,3-dimethyl-2,3-dihydro-1H-inden-5-ol, 3,3,3',3'-tetramethyl-2,2',3,3'-tetrahydro-1,1'-spirobi-[indene] 5,6'-diol, dihydroxybenzophenone, tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tetrakis(4-hydroxyphenyl)ethane dicyclopentadienylbis(2,6-dimethyl phenol), dicyclopentadienyl bis(ortho-cresol), dicyclopentadienyl bisphenol, or the like.

The aldehydes used to form the benzoxazine can be any aldehyde, such as an aldehyde having 1 to 10 carbon atoms. For example, the aldehyde can be formaldehyde. The amine used to form the benzoxazine can be an aromatic amine, an aliphatic amine, an alkyl substituted aromatic, or an aromatic substituted alkyl amine. The amine can be a polyamine, for example to prepare polyfunctional benzoxazine monomers for crosslinking.

The amines for forming benzoxazines have 1 to 40 carbon atoms unless they include aromatic rings, and then they can have 6 to 40 carbon atoms. The amine of di- or polyfunctional can be a branch point to connect one polybenzoxazine to another.

In some examples, thermal polymerization at 150 to 300° C can be used for polymerizing benzoxazine monomers. The polymerization can be done in bulk, from solution, or otherwise. Catalysts, such as carboxylic acids, can be used to reduce the polymerization temperature or accelerate the polymerization rate at the same temperature.

Vinyl benzyl ether resins can be prepared from condensation of a phenol with a vinyl benzyl halide, such as vinyl benzyl chloride. Bisphenol-A and trisphenols and polyphenols are generally used to produce poly(vinylbenzyl ethers) which can be used to produce crosslinked thermosetting resins. Exemplary vinyl benzyl ethers can include those vinylbenzyl ethers produced from reaction of a vinylbenzyl halide with resorcinol, catechol, hydroquinone, 2,6-dihydroxynaphthalene, 2,7-dihydroxynaphthalene, 2-(diphenyl-phosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol, 4,4'-isopropylidenebis(2,6-dibromophenol), 4,4'-isopropylidenebis(2,6-dimethylphenol) (teramethylbisphenol A), 4,4'-isopropylidenebis(2-methylphenol), 4,4'-ispropylidenebis(2-allylphenol), 4,4'(1,3-phenylenediisopropylidene)bisphenol, 4,4'-isopropylidenebis(3-phenylphenol) 4,4'-(1,4-phenylenediisoproylidene)bisphenol, 4,4'-ethylidenediphenol, 4,4'-oxydiphenol, 4,4'-thiodiphenol, 4,4'-thiobis(2,6-dimethylphenol), 4,4'-sufonyldiphenol, 4,4'-sulfonylbis(2,6-dimethylphenol) 4,4'-sulfinyl-diphenol, 4,4'-hexafluoroisopropylidene)bisphenol, 4,4'(1-phenylethylidene) bisphenol, bis(4-hydroxyphenyl)-2,2-dichloroethylene, bis(4-hydroxy-phenyl)methane, bis(2,6-dimethyl-4-hydroxyphenyl)methane, 4,4'-(cyclopentylidene)diphenol, 4,4'-(cyclohexylidene)diphenol, 4,4'-(cyclododecylidene)diphenol 4,4'-(bicyclo [2.2.1]heptylidene)diphenol, 4,4'-(9H-fluorene-9,9-diyl)diphenol, 3,3-bis(4-hydroxyphenyl)-isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol, dihydroxybenzophenone, tris(4-hydroxyphenyl)methane, tris(4-hydroxyphenyl)ethane, tris(4-hydroxyphenyl)-propane, tris(4-hydroxyphenyl)butane, tris(3-methyl-4-hydroxyphenyl)methane, tris(3,5-dimethyl-4-hydroxy-phenyl)methane, tetrakis(4-hydroxyphenyl)ethane, tetrakis(3,5-dimethyl-4-hydroxyphenyl)-ethane, bis(4-hydroxyphenyl)phenylphosphine oxide, dicyclopentadienyl-bis(2,6-dimethyl phenol), dicyclopentadienyl bisphenol, or the like.

Arylcyclobutenes include those derived from compounds of the structure 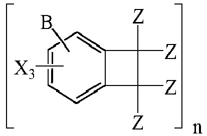 wherein B is an organic or inorganic radical of valence n (including carbonyl, sulfonyl, sulfinyl, sulfide, oxy, alkylphosphonyl, arylphosphonyl, isoalkylidene, cycloalkylidene, arylalkylidene, diarylmethylidene, methylidene dialkylsilanyl, arylalkylsilanyl, diarylsilanyl and C₆₋₂₀ phenolic compounds); each occurrence of X is independently hydroxy or C₁₋₂₄ hydrocarbyl (including linear and branched alkyl and cycloalkyl); and each occurrence of Z is independently hydrogen, halogen, or C₁-₁₂ hydrocarbyl; and n is 1 to 1000 ,or 1 to 8, or n is 2, 3, or 4. Other exemplary arylcyclobutenes and methods of arylcyclobutene synthesis can be found in US 4,743,399, US 4,540,763, US 4,642,329, US 4,661,193, US 4,724,260, and 5391,650.

Perfluorovinyl ethers are typically synthesized from phenols and bromotetrafluoroethane followed by zinc catalyzed reductive elimination producing ZnFBr and the desired perfluorovinylether. By this route bis, tris, and other polyphenols can produce bis-, tris- and poly(perfluorovinylether)s. Phenols useful in their synthesis include resorcinol, catechol, hydroquinone, 2,6-dihydroxy naphthalene, 2,7-dihydroxynapthalene, 2-(diphenylphosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol (bisphenol A), 4,4'-isopropylidenebis(2,6-dibromophenol), 4,4'-isopropylidenebis(2,6-dimethylphenol), 4,4'-isopropylidenebis(2-methylphenol), 4,4'-isopropylidenebis(2-allylphenol), 4,4'(1,3-phenylenediisopropylidene)-bisphenol, 4,4'-isopropylidenebis(3-phenylphenol) 4,4'-(1,4-phenylenediisoproylidene)-bisphenol, 4,4'-ethylidenediphenol, 4,4'oxydiphenol, 4,4'thiodiphenol, 4,4'thiobis(2,6-dimethylphenol), 4,4'-sufonyldiphenol, 4,4'-sulfonylbis(2,6-dimethylphenol) 4,4'-sulfinyldiphenol, 4,4'-hexafluoroisoproylidene)bisphenol, 4,4'(1-phenylethylidene)-bisphenol, bis(4-hydroxyphenyl)-2,2-dichloroethylene, bis(4-hydroxyphenyl)-methane, bis(2,6-dimethyl-4-hydroxyphenyl)methane, 4,4'-(cyclopentylidene)diphenol, 4,4'-(cyclohexylidene)diphenol, 4,4'-(cyclododecylidene)diphenol 4,4'-(bicyclo[2.2.1]heptylidene)-diphenol, 4,4'-(9H-fluorene-9,9-diyl)diphenol, 3,3-bis(4-hydroxyphenyl)isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol (Spirobiindane), dihydroxybenzophenone, tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tris(3,5-dimethyl-4-hydroxyphenyl)methane, tetrakis(4-hydroxyphenyl)ethane, tetrakis(3,5-dimethyl-4-hydroxyphenyl)ethane, bis(4-hydroxyphenyl)-phenylphosphine oxide, dicyclopentadienylbis(2,6-dimethyl phenol), dicyclopentadienyl bis(2-methylphenol), dicyclopentadienyl bisphenol, or the like.

The crosslinking agents, which also include auxiliary crosslinking agents, are not particularly limited. The crosslinking agents can be used alone or in combinations of two or more different crosslinking agents. Exemplary crosslinking agents and auxiliary crosslinking agents include oligomers or polymers with curable vinyl functionality. Such materials include oligomers and polymers having crosslinkable unsaturation. Examples include styrene butadiene rubber (SBR), butadiene rubber (BR), and nitrile butadiene rubber (NBR) having unsaturated bonding based on butadiene; natural rubber (NR), isoprene rubber (IR), chloroprene rubber (CR), butyl rubber (IIR), and halogenated butyl rubber having unsaturated bonding based on isoprene; ethylene-α-olefin copolymer elastomers having unsaturated bonding based on dicyclopentadiene (DCPD), ethylidene norbornene (ENB), or 1,4-dihexadiene (1,4-HD) (e.g., ethylene-α-olefin copolymers obtained by copolymerizing ethylene, an α-olefin, and a diene, such as ethylene-propylene-diene terpolymer (EPDM) and ethylene-butene-diene terpolymer (EBDM)). Examples also include hydrogenated nitrile rubber, fluorocarbon rubbers such as vinylidenefluoride-hexafluoropropene copolymer and vinylidenefluoride-pentafluoropropene copolymer, epichlorohydrin homopolymer (CO), copolymer rubber (ECO) prepared from epichlorohydrin and ethylene oxide, epichlorohydrin allyl glycidyl copolymer, propylene oxide allyl glycidyl ether copolymer, propylene oxide epichlorohydrin allyl glycidyl ether terpolymer, acrylic rubber (ACM), urethane rubber (U), silicone rubber (Q), chlorosulfonated polyethylene rubber (CSM), polysulfide rubber (T) and ethylene acrylic rubber. Further examples include various liquid rubbers, for example several types of liquid butadiene rubbers, and the liquid atactic butadiene rubber that is butadiene polymer with 1,2-vinyl connection prepared by anionic living polymerization. It is also possible to use liquid styrene butadiene rubber, liquid nitrile butadiene rubber (CTBN, VTBN, ATBN, etc. by Ube Industries, Ltd.), liquid chloroprene rubber, liquid polyisoprene, dicyclopentadiene type hydrocarbon polymer, and polynorbornene (for example, as sold by Elf Atochem).

Polybutadiene resins containing elevated levels of 1,2 addition are desirable for thermosetting matrices. Examples include the functionalized polybutadienes and poly(butadienestyrene) random copolymers sold by Ricon Resins, Inc. under the trade names RICON, RICACRYL, and RICOBOND resins. These include butadienes containing both low vinyl content such as RICON 130, 131, 134, 142; polybutadienes containing high vinyl content such as RICON 150, 152, 153, 154, 156, 157, and P30D; random copolymers of styrene and butadiene including RICON 100, 181, 184, and maleic anhydride grafted polybutadienes and the alcohol condensates derived therefrom such as RICON 130MA8, RICON MA13, RICON 130MA20, RICON 131MAS, RICON 131MA10, RICON MA17, RICON MA20, RICON 184MA6 and RICON 156MA17. Also included are polybutadienes that can be used to improve adhesion including RICOBOND 1031, RICOBOND 1731, RICOBOND 2031, RICACRYL 3500, RICOBOND 1756, RICACRYL 3500; the polybutadienes RICON 104 (25% polybutadiene in heptane), RICON 257 (35% polybutadiene in styrene), and RICON 257 (35% polybutadiene in styrene); (meth)acrylic functionalized polybutadienes such as polybutadiene diacrylates and polybutadiene dimethacrylates. These materials are sold under the tradenames RICACRYL 3100, RICACRYL 3500, and RICACRYL 3801. Also are included are powder dispersions of functional polybutadiene derivatives including, for example, RICON 150D, 152D, 153D, 154D, P30D, RICOBOND 0 1731 HS, and RICOBOND 1756HS. Further butadiene resins include poly(butadiene-isoprene) block and random copolymers, such as those with molecular weights from 3,000 to 50,000 g/mol and polybutadiene homopolymers having molecular weights from 3,000 to 50,000 g/mol. Also included are polybutadiene, polyisoprene, and polybutadiene-isoprene copolymers functionalized with maleic anhydride functions, 2-hydroxyethylmaleic functions, or hydroxylated functionality.

Further examples of oligomers and polymers with curable vinyl functionality include unsaturated polyester resins based on maleic anhydride, fumaric acid, itaconic acid and citraconic acid; unsaturated epoxy (meth)acrylate resins containing acryloyl groups, or methacryloyl group; unsaturated epoxy resins containing vinyl or allyl groups, urethane (meth)acrylate resin, polyether (meth)acrylate resin, polyalcohol (meth)acrylate resins, alkyd acrylate resin, polyester acrylate resin, spiroacetal acrylate resin, diallyl phthalate resin, diallyl tetrabromophthalate resin, diethyleneglycol bisallylcarbonate resin, and polyethylene polythiol resins. For example, the crosslinking agent. Other exemplary crosslinking agents further include polyfunctional crosslinking monomers such as (meth)acrylate monomers having two or more (meth)acrylate moieties per monomer molecule. Exemplary polyfunctional monomers include di(meth)acrylates such as 1,6-hexanediol di(meth)acrylate, 1,4-cyclohexanediol di(meth)acrylate, tripropylene glycol di(meth)acrylate, neopentyl glycol di(meth)acrylate, neopentyl glycol propoxylate di(meth)acrylate, neopentyl glycol ethoxylate di(meth)acrylate, neopentyl glycol propoxylate di(meth)acrylate, neopentyl glycol ethoxylate di(meth)acrylate, polyethylene glycol di(meth)acrylate, glycerol di(meth)acrylate, or the like; tri(meth)acrylates such as trimethylolpropane tri(meth)acrylate, 1,2,4- butanetriol tri(meth)acrylate, trimethylolpropane ethoxylate tri(meth)acrylate, or the like; tri(meth)allyls such as tri(meth)allyl cyanurate, tri(meth)allyl isocyanurate, tri(meth)allyl esters of citric acid, tri(meth)allyl esters of phosphoric acid, pentaerythritol tri(meth)acrylate, tris(hydroxyethyl)isocyanurate tri(meth)acrylate, or the like; tetra(meth)acrylates such as pentaerythritol tetra(meth)acrylate or the like; penta(meth)acrylates such as dipentaerythritol penta(meth)acrylate, or the like; hexa(meth)acrylates such as dipentaerythritol hexa(meth)acrylate, sorbitol hexa(meth)acrylate, or the like; glycidyl compounds such as glycidyl (meth)acrylate, (meth)allyl glycidyl ether, 1-chloro-2,3-epoxypropyl (meth)acrylate, 2-bromo-3,4-epoxybutyl (meth)acrylate, 2-(epoxyethyloxy)-ethyl (meth)acrylate, 2-(3,4-epoxybutyloxy)-ethyl (meth)acrylate, or the like; polythiol compounds such as trimethylolpropane tris(mercaptopropionate), pentaerythritol tetrakis(3-mercaptopropionate), or the like; silanes such as tetramethoxysilane, tetraethoxysilane, tetrapropoxysilane, tetra-n-butoxysilane, vinyltris(methylethyloximino)silane, vinyltris-(acetoxime)silane, methyltris(methylethyloximino)silane, methyltris(acetoxime)silane, vinyltrimethoxysilane, methyltrimethoxysilane, vinyltris(isopropenoxy)silane, tetraacetoxy-silane, methyltriacetoxysilane, ethyltriacetoxysilane, vinyltriacetoxysilane, di-t-butoxy-diacetoxysilane, methyltris(ethyl lactate)silane, vinyltris(ethyl lactate)silane, or the like; carbodiimides such as N-(3-dimethylaminopropyl)-N'-ethylcarbodiimide hydrochloride, dicyclohexylcarbodiimide, or the like; or a combination thereof. The curable thermosetting composition can optionally include a crosslinking catalyst, such as a carboxylic acid salt.

When the curable thermosetting composition includes a crosslinking agent, the crosslinking agent can be included in an amount of 1 to 60 wt%, or 5 to 45 wt%, or 10 to 30 wt%, based on total weight of the curable thermosetting composition.

The curable thermosetting composition can include one or more curing agents. As used herein, the term "curing agent" includes compounds that are variously described as curing agents, hardeners, or the like, or as both.

Exemplary curing agents and hardeners include amines, alcohols, phenols, carboxylic acids, acid anhydrides, and the like. For example, phenolic hardeners include novolac type phenol resins, resole type phenol resins, cresol novolac resins, aralkyl type phenol resins, phenol aralkyl resins, cresol aralkyl resins, naphthol aralkyl resins, dicyclopentadiene type phenol resins, terpene modified phenol resins, biphenyl type phenol resins, biphenyl-modified phenol aralkyl resins, bisphenols, triphenylmethane type phenol resins, tetraphenylol ethane resins, naphthol novolac resins, naphthol-phenol co-condensed novolac resins, naphthol-cresol co-condensed novolac resins, amino triazine modified phenol resins, or a combination thereof. Examples of the anhydride hardeners include methylhexahydrophthalic anhydride (MHHPA), methyltetrahydrophthalic anhydride, styrene-maleic anhydride copolymers (SMA), and olefin-maleic anhydride copolymers such as maleic anhydride grafted polyethylene, maleic anhydride grafted polypropylene, or a combination thereof. Other curing agents and hardeners include compounds such as dicyandiamides, polyamides, amidoamines, phenalkamines, Mannich bases, anhydrides, phenol-formaldehyde resins, amine-formaldehyde resins, phenol-formaldehyde resins, carboxylic acid functional polyesters, polysulfides, polymercaptans, isocyanates, cyanate ester compounds, or any combination thereof. Other exemplary curing agents include tertiary amines, Lewis acids, and oligomers or polymers with unsaturation.

When the curable thermosetting composition includes a curing agent, the curing agent can be included in an amount of 0.01 to 50 wt%, or 0.1 to 30 wt%, or 0.1 to 20 wt%, based on total weight of the curable thermosetting composition.

The curable thermosetting composition can include a curing catalyst. As used herein, the term "curing catalyst" includes compounds that are variously described as curing accelerators, curing promoters, curing catalysts, and curing co-catalysts.

Exemplary curing accelerators include heterocyclic accelerators such as a substituted or unsubstituted C₃₋₆ heterocycle comprising 1 to 4 ring heteroatoms, wherein each heteroatom is independently the same or different, and is nitrogen, oxygen, phosphorus, silicon, or sulfur. Heterocyclic accelerators include benzotriazoles; triazines; piperazines such as aminoethylpiperazine, N-(3-aminopropyl)piperazine, or the like; imidazoles such as 1-methylimidazole, 2-methylimidazole, 3-methyl imidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole; cyclic amidine such as 4-diazabicyclo(2,2,2)octane, diazabicycloundecene, 2-phenyl imidazoline, or the like; N,N-dimethylaminopyridine; a sulfamidate; or a combination thereof.

Amine curing accelerators include isophoronediamine, triethylenetetraamine, diethylenetriamine, 1,2- and 1,3-diaminopropane, 2,2-dimethylpropylenediamine, 1,4-diaminobutane, 1,6-diaminohexane, 1,7-diaminoheptane, 1,8-diaminooctane, 1,9-diaminononane, 1,12-diaminododecane, 4-azaheptamethylenediamine, N,N'-bis(3-aminopropyl)butane-1,4-diamine, dicyanamide, diamide diphenylmethane, diamide diphenylsulfonic acid (amine adduct), 4,4'-methylenedianiline, diethyltoluenediamine, m-phenylenediamine, p-phenylenediamine, melamine formaldehyde resins, urea formaldehyde resins, tetraethylenepentamine, 3-diethylaminopropylamine, 3,3'-iminobispropylamine, 2,4-bis(p-aminobenzyl)aniline, tetraethylenepentamine, 3-diethylaminopropylamine, 2,2,4- and 2,4,4-trimethylhexamethylenediamine, 1,2- and 1,3-diaminocyclohexane, 1,4-diamino-3,6-diethylcyclohexane, 1,2-diamino-4-ethylcyclohexane, 1,4-diamino-3,6-diethylcyclohexane, 1-cyclohexyl-3,4-diminocyclohexane, 4,4'-diaminondicyclohexylmethane, 4,4'-diaminodicyclohexylpropane, 2,2-bis(4-aminocyclohexyl)propane, 3,3'-dimethyl-4,4'-diaminodicyclohexylmethane, 3-amino-1-cyclohexaneaminopropane, 1,3- and 1,4-bis(aminomethyl)cyclohexane, m- and p-xylylenediamine, or diethyl toluene diamines; or a tertiary amine hardening accelerator such as triethylamine, tributylamine, dimethylaniline, diethylaniline, benzyldimethylamine (BDMA), α-methylbenzyldimethylamine, N,N-dimethyl amino pyridine, *N*,*N*-dimethylaminoethanol, *N*,*N*-dimethylaminocresol, or tri(*N*,*N-*dimethylaminomethyl)phenol; or a combination thereof.

The curing accelerator can be a latent cationic cure catalyst including, for example, diaryliodonium salts, phosphonic acid esters, sulfonic acid esters, carboxylic acid esters, phosphonic ylides, triarylsulfonium salts, benzylsulfonium salts, aryldiazonium salts, benzylpyridinium salts, benzylammonium salts, isoxazolium salts, or the like, or a combination thereof. The diaryliodonium salt can have the structure [(R¹⁰)(R¹¹)I]⁺ X⁻ , wherein R¹⁰ and R¹¹ are each independently a C₆₋₁₄ monovalent aromatic hydrocarbon radical, optionally substituted with from 1 to 4 monovalent radicals selected from C₁₋₂₀ alkyl, C₁₋₂₀ alkoxy, nitro, and chloro; and wherein X- is an anion. The additional cure accelerator can have the structure [(R¹⁰)(R¹¹)I]^{÷} SbF₆⁻, wherein R¹⁰ and R¹¹ are each independently a C₆-₁₄ monovalent aromatic hydrocarbon, optionally substituted with from 1 to 4 C₁₋₂₀ alkyl, C₁₋₂₀ alkoxy, nitro, or chloro; for example, 4-octyloxyphenyl phenyl iodonium hexafluoroantimonate.

The curing accelerator can be a metal salt complex, such as a copper (II) aluminum (III), zinc, cobalt, tin salt of an aliphatic or aromatic carboxylic acid selected from copper (II), tin (II), and aluminum (III) salts of acetate, stearate, gluconate, citrate, benzoate, and mixtures thereof. For example, the cure accelerator can be a copper (II) or aluminum (III) salts of β-diketonates; copper (II), iron (II), iron (III), cobalt (II), cobalt (III), or aluminum (III) salts of acetylacetonates; zinc (II), chromium (II), or manganese (II) salts of octoates; or a combination thereof.

When the curable thermosetting composition includes a curing catalyst, the curing catalyst can be included in an amount of 0.01 to 5 wt%, or 0.05 to 5 wt%, or 0.1 to 5 wt%, based on total weight of the curable thermosetting composition.

The curable thermosetting composition can optionally include a curing initiator, such as a peroxide compound. Exemplary peroxide curing initiators can include benzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, t-butylperoxybenzoate, t-butylperoxy 2-ethylhexyl carbonate, 2,4-dichlorobenzoyl peroxide, 2,5-dimethylhexane-2,5-dihydroperoxide, butyl-4,4-bis(tert-butyldioxy)valerate, 2,5-dimethyl-2,5-di(t-butylperoxy)-hex-3-yne, di-t-butylperoxide, t-butylcumyl peroxide, α,α'-bis(t-butylperoxy-m-isopropyl)benzene, 2,5-dimethyl-2,5-di(t-butylperoxy)hexane, dicumylperoxide, di(t-butylperoxy isophthalate, t-butylperoxybenzoate, 2,2-bis(t-butylperoxy)butane, 2,2-bis(t-butylperoxy)octane, 2,5-dimethyl-2,5-di(benzoylperoxy)hexane, 1,1-di-(tert-butylperoxy)-3,3,5-trimethylcyclohexane, di(trimethylsilyl)peroxide, trimethylsilylphenyltriphenylsilyl peroxide, or the like, or a combination thereof.

When the curable thermosetting composition includes a curing initiator, the curing initiator can be included in an amount of 0.1 to 5 wt%, or 0.5 to 5 wt%, or 1 to 5 wt%, based on total weight of the curable thermosetting composition.

Flame retardants include, for example, organic compounds that comprise phosphorus, bromine, or chlorine. Non-brominated and non-chlorinated phosphorus-containing flame retardants can be preferred in certain applications for regulatory reasons, for example organic phosphates and organic compounds containing phosphorus-nitrogen bonds.

Examples of phosphorous flame retardants include phosphates, phosphazenes, phosphite esters, phosphines, phosphinates, polyphosphates, and phosphonium salts. Phosphates include triphenyl phosphate, tricresyl phosphate, isopropylated triphenyl phosphate, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, xylenyl-diphenyl phosphate; cresyl-diphenyl phosphate; 1,3-phenylenebis(di-2,6-xylenyl phosphate); 9,10-dihydro-9-oxa-10-phosphaphenanthrene-10-oxide (DOPO), tetraphenyl diphosphate (RDP), condensed phosphate compounds such as aromatic condensed phosphate compounds; and cyclic phosphate compounds, bis(diphenyl) phosphate of hydroquinone, bis(diphenyl) phosphate of bisphenol A, or the like, or their oligomeric or polymeric counterparts, or a combination thereof.

Examples of the phosphazene compounds include cyclic and chain phosphazene compounds. The cyclic phosphazene compounds (cyclophosphazenes) have a cyclic structure in which phosphorus-nitrogen double bonds are present in the molecule. Examples of phosphinate compounds include aluminum dialkylphosphinate, aluminum tris-(diethylphosphinate), aluminum tris-(methylethylphosphinate), aluminum tris-(diphenylphosphinate), zinc bis-(diethylphosphinate), zinc bis-(methylphosphinate), zinc bis-(diphenylphosphinate), titanyl bis-(diethylphosphinate), titanyl bis-(methylethylphosphinate), and titanyl bis-(diphenylphosphinate). Examples of polyphosphate compounds include melamine polyphosphate, melam polyphosphate, and melem polyphosphate. Examples of phosphonium salt compounds include tetraphenylphosphonium tetraphenylborate. Examples of the phosphite ester compounds include trimethylphosphite and triethylphosphite. Flame retardant compounds containing phosphorus-nitrogen bonds include phosphonitrilic chloride, phosphorus ester amides, phosphoric acid amides, phosphonic acid amides, phosphinic acid amides, and tris(aziridinyl) phosphine oxide.

Halogenated materials can also be used as flame retardants, for example bisphenols such as 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromobiphenyl ether, decabromodiphenylethane, as well as oligomeric and polymeric halogenated aromatic compounds, such as brominated styrene, 4,4-dibromobiphenyl, ethylene-bis(tetrabromophthalimide), or a copolycarbonate of bisphenol A and tetrabromobisphenol A and a carbonate precursor, e.g., phosgene. Metal synergists, e.g., antimony oxide, can also be used with the flame retardant.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, or Na₃AlF₆.

When the curable thermosetting composition includes a flame retardant, the flame retardant can be included in an amount of greater than 1 wt%, or 1 to 20 wt%, or 5 to 20 wt%, based on total weight of the curable thermosetting composition.

The curable thermosetting composition can further include inorganic or organic fillers, such as a particulate filler, a fibrous filler, or the like, or a combination thereof. Any inorganic and organic fillers, including those known in the art, can be used without limitation.

Exemplary fillers include, for example, clay, talc, kaolin, wollastonite, mica, calcium carbonate, magnesium carbonate; alumina, thiourea, glass powder, B- or Sn-based fillers such as zinc borate, zinc stannate and zinc hydroxystannate; metal oxides such as zinc oxide and tin oxide. alumina, silica (including fused silica, fumed silica, spherical silica, and crystalline silica), boron nitride (including spherical boron nitride), aluminum nitride, silicon nitride, magnesia, magnesium silicate, antimony trioxide, glass fibers (chopped, milled, or cloth), glass mat, glass bubbles, hollow glass microspheres, aramid fibers, quartz, or the like, or a combination thereof. Other exemplary inorganic fillers include powdered titanium ceramics such as any one of the titanates of barium. lead, strontium, calcium, bismuth, magnesium, or the like. Inorganic fillers also include hydrates such as aluminum hydroxide, magnesium hydroxide, zeolite, and hydrotalcite. In some aspects, the filler can be treated with a coupling agent as disclosed herein.

Glass fibers include those based on E, A, C, ECR, R, S, D, and NE glasses, as well as quartz. The glass fiber can have any suitable diameter, such as from 2 to 30 micrometers (µm), or 5 to 25 µm, or 5 to 15 µm. The length of the glass fibers before compounding are not limited and can be 2 to 7 millimeters (mm), or 1.5 to 5 mm. Alternatively, longer glass fibers or continuous glass fibers can be used. Suitable glass fiber is commercially available from suppliers such as Owens Corning, Nippon Electric Glass, PPG, and Johns Manville.

The organic filler can be, for example, polytetrafluoroethylene powder, polyphenylene sulfide powder, and poly(ether sulfone) powder, poly(phenylene ether) powder, polystyrene, divinylbenzene resin, or the like, or a combination thereof.

The filler can be selected based on the thermal expansion coefficient (CTE) and thermal conductivity requirements. For example, Al₂O₃, BN, AlN, or a combination thereof, can be used for an electronics module with high thermal conductivity. For example, MgO can be used for increased thermal conductivity and increased CTE. For example, SiO₂ (e.g., amorphous SiO₂) can be used for a lightweight module having a low CTE and a small dielectric constant.

When the curable thermosetting composition includes a filler, the filler can be included in an amount of greater than 1 wt%, or 1 to 50 wt%, or 1 to 30 wt%, or 10 to 30 wt%, based on total weight of the curable thermosetting composition.

Coupling agents, also referred to as adhesion promoters, include chromium complexes, silanes, titanates, zircon-aluminates, olefin-maleic anhydride copolymers, reactive cellulose esters, and the like. Exemplary olefin-maleic anhydride copolymers can include maleic anhydride grafted polyethylene, maleic anhydride grafted polypropylene, or a combination thereof. Exemplary silanes can include epoxysilane compound, aminosilane compounds methacryloxysilane compounds, vinylsilane compounds, or a combination thereof.

Examples of aminosilane coupling agents are y -aminopropyltrimethoxy-silane, γ-aminopropyltriethoxysilane, N-beta(aminoethyl)γ-aminopropylmethyl-dimethoxysilane, N-beta(aminoethyl)γ -aminopropyltrimethoxysilane, and N-beta(aminoethyl)γ-aminopropyltriethoxysilane. Illustrative epoxysilane coupling agents include γ - glycidoxypropylmethyldiethoxysilane, gamma-glycidoxypropyltrimethoxysilane, and γ-glycidoxypropyltriethoxysilane. Examples of methacryloxysilane coupling agents include γ-methacryloxypropylmethyldimethoxysilane, γ -methacryloxypropyl-trimethoxysilane, γ-methacryloxypropyldiethoxysilane, and γ-methacryloxypropyltriethoxysilane.

Other exemplary silane coupling agents include bis(3-triethoxysilylpropyl) tetrasulfide, bis(3-triethoxysilylpropyl)trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthio-carbamoyl tetrasulfide, dimethoxymethylsilylpropylbenzothiazolyl tetrasulfide, or the like, or a combination thereof. The silane coupling agent can be a polysulfide silane coupling agent having 2 to 4 sulfur atoms forming a polysulfide bridge. For example, the coupling agent can be a bis(3-triethoxysilylpropyl) di-, tri-, or tetrasulfide.

When the curable thermosetting composition includes a coupling agent, the coupling agent can be included in an amount of 0.01 to 5 wt%, or 0.05 to 5 wt%, or 0.1 to 5 wt%, based on total weight of the curable thermosetting composition.

The curable thermosetting composition can optionally include a solvent. The solvent can be, for example, a C₃₋₈ ketone, a C₃₋₈ *N*,*N*-dialkylamide, a C₄₋₁₆ dialkyl ether, a C₆₋₁₂ aromatic hydrocarbon, a C₁₋₃ chlorinated hydrocarbon, a C₃₋₆ alkyl alkanoate, a C₂₋₆ alkyl cyanide, or a combination thereof. Specific ketone solvents include, for example, acetone, methyl ethyl ketone, methyl isobutyl ketone, or a combination thereof. Specific C₄₋₈ *N,N-*dialkylamide solvents include, for example, dimethylformamide, dimethylacetamide, *N*-methyl-2-pyrrolidone, or a combination thereof. Specific dialkyl ether solvents include, for example, tetrahydrofuran, ethylene glycol monomethylether, dioxane, or a combination thereof. Specific aromatic hydrocarbon solvents include, for example, benzene, toluene, xylenes, styrene, divinylbenzenes, or a combination thereof. The aromatic hydrocarbon solvent can be non-halogenated. Specific C₃₋₆ alkyl alkanoates include, for example, methyl acetate, ethyl acetate, methyl propionate, ethyl propionate, or a combination thereof. Specific C₂₋₆ alkyl cyanides include, for example, acetonitrile, propionitrile, butyronitrile, or a combination thereof. Specific C₂₋₆ alkyl cyanides include, for example, acetonitrile, propionitrile, butyronitrile, or a combination thereof. For example, the solvent can be N,N-dimethylformamide, N,N-dimethylacetamide, N,N-diethylacetamide, N,N-dimethylmethoxyacetamide, N-methyl-2-pyrrolidone, N-cyclohexylpyrrolidinone, N-methylcaprolactam, 1,3-dimethyl-2-imidazolidone, 1,2-dimethoxyethane, 1,3-dioxane, 1,4-dioxane, tetrahydrofuran, γ-butyrolactone, γ-caprolactone, dimethylsulfoxide, benzophenone, methyl ethyl ketone, methyl isobutyl ketone, cyclohexanone, diglyme, triglyme, tetraglyme, N,N-dimethylethyleneurea, N,N-dimethylpropyleneurea, tetramethylurea, propylene glycol phenyl ether, anisole, veratrole, o-dichlorobenzene, chlorobenzene, trichloroethane, methylene chloride, chloroform, pyridine, picoline, ethyl lactate, n-butyl acetate, butyl cellosolve acetate, butyl carbitol acetate, ethyl cellosolve acetate, ethyl carbitol acetate, propylene carbonate, sulfolane, an ionic liquid, or a combination thereof.

When a solvent is utilized, the curable thermosetting composition can include 2 to 99 wt% of the solvent, based on weight total of the curable thermosetting composition. For example, the solvent amount can be 5 to 80 wt%, or 10 to 60 wt%, or 20 to 50 wt%, based on weight total of the curable thermosetting composition. The solvent can be chosen, in part, to adjust the viscosity of the curable thermosetting composition. Thus, the solvent amount can depend on variables including the type and amount of capped poly(arylene ether) copolymer, the type and amount of other components such as curing additive, the type and amount of any auxiliary thermosetting resin(s), and the processing temperature used for any subsequent processing of the curable thermosetting composition, for example, impregnation of a reinforcing structure with the curable thermosetting composition for the preparation of a composite. The solvent can be anhydrous. For example, the solvent can include less than 100 parts per million (ppm), or less than 50 ppm, or less than 10 ppm of water based on total weight of the solvent.

The curable thermosetting composition can further include a curable unsaturated monomer composition, which can include, for example, a monofunctional styrenic compound (e.g., styrene), a monofunctional (meth)acrylic compound, or the like, or a combination thereof. For example, the curable unsaturated monomer composition can be an alkene-containing monomer or an alkyne-containing monomer. Exemplary alkene- and alkyne-containing monomers includes those described in U.S. Patent No. 6,627,704 to Yeager et al., and include (meth)acrylates, (meth)acrylamides, N-vinylpyrrolidone, and vinylazalactones as disclosed in U.S. Pat. No. 4,304,705 of Heilman et al. Exemplary monofunctional monomers include mono(meth)acrylates, such as methyl (meth)acrylate, ethyl (meth)acrylate, isopropyl (meth)acrylate, isooctyl (meth)acrylate, isobornyl (meth)acrylate, (meth)acrylic acid, n-hexyl (meth)acrylate, tetrahydrofurfuryl (meth)acrylate, N-vinylcaprolactam, N-vinylpyrrolidone, (meth)acrylonitrile, or the like, or a combination thereof.

The curable thermosetting composition can, optionally, further include one or more additional additives. Additional additives include, for example, dyes, pigments, colorants, antioxidants, heat stabilizers, light stabilizers, plasticizers, defoaming agents, lubricants, dispersants, flow modifiers, drip retardants, antiblocking agents, antistatic agents, flow-promoting agents, processing aids, substrate adhesion agents, mold release agents, toughening agents, low-profile additives, stress-relief additives, or the like, or a combination thereof. When present, the additional additives can be included in any effective amount, for example in an amount of 0.01 to 20 wt%, or 0.01 to 10 wt%, or 0.01 to 5 wt%, or 0.01 to 1 wt%, based on the total weight of the curable thermosetting composition.

The curable thermosetting composition can be prepared by combining the bifunctional phenylene ether oligomer and the other optional components disclosed herein using any suitable method.

Also provided is a cured thermoset composition comprising a cured product of the curable thermosetting composition. There is no particular limitation on the method by which the curable thermosetting composition can be cured. The curable composition can, for example, be cured thermally or by using irradiation techniques, including UV irradiation or electron beam irradiation. For example, a cured product can be obtained by heating the curable thermosetting composition defined herein for a time and temperature sufficient to evaporate the solvent and effect curing. When heat curing is used, the temperature can be 30 to 400°C, or 50 to 250°C, or 100 to 250°C. The heating can be for 1 minute to 24 hours, or 1 minute to 6 hours, or 3 hours to 5 hours. The curing can be staged to produce a partially cured and often tack-free resin, which then is fully cured by heating for longer periods or temperatures within the aforementioned ranges. As used herein, the term "cured" encompasses products that are partially cured or fully cured.

The cured thermoset composition can have one or more desirable properties. For example, the thermoset composition can have a glass transition temperature of greater than or equal to 165°C, preferably greater than or equal to 170°C, more preferably 165 to 180°C. The thermoset composition can also advantageously exhibit a low dielectric constant (Dk), a low dissipation factor (Df), and reduced moisture absorption. For example, the thermoset composition can have a dielectric constant of less than 3.0, preferably less than 2.75, more preferably less than 2.6 at a frequency of 10 GHz. The thermoset composition can have a dissipation factor of less than 0.01, or less than 0.005 at a frequency of 10 GHz. Thus, thermoset compositions comprising the phenylene ether oligomer of the present disclosure can be particularly well suited for use in electronics applications.

The curable thermosetting compositions and cured thermoset compositions can be used in a variety of applications and uses, including any applications where conventional thermosetting compositions are used. For example, useful articles including the curable thermosetting composition or the cured thermoset composition can be in the form of a composite, a foam, a fiber, a layer, a coating, an encapsulant, an adhesive, a sealant, a molded component, a prepreg, a casing, a laminate, a metal clad laminate, an electronic composite, a structural composite, or a combination thereof. Exemplary uses and applications include coatings such as protective coatings, sealants, weather resistant coatings, scratch resistant coatings, and electrical insulative coatings; adhesives; binders; glues; composite materials such as those using carbon fiber and fiberglass reinforcements. When utilized as a coating, the disclosed compounds and compositions can be deposited on a surface of a variety of underlying substrates. For example, the compositions can be deposited on a surface of metals, plastics, glass, fiber sizings, ceramics, stone, wood, or any combination thereof. The disclosed compositions can be used as a coating on a surface of a metal container (e.g., aluminum or steel), such as those commonly used for packaging and containment in the paint and surface covering industries. The curable thermosetting composition and the cured thermoset composition derived therefrom can also be particularly well suited for use in forming electrical components and computer components.

Methods of forming a composite can include impregnating a reinforcing structure with a curable thermosetting composition; partially curing the curable thermosetting composition to form a prepreg; and laminating a plurality of prepregs. The reinforcing structure can be a porous base material such as a fibrous preform or substrate, or other porous material comprising a ceramic, a polymer, a glass, carbon, or a combination thereof. For example, the porous base material can be woven or non-woven glass fabric, a fiberglass fabric, or carbon fiber. When the article includes a fibrous preform, the method of manufacturing the article can include forming the article from the curable thermosetting composition by coating or impregnating the preform with the curable composition. The impregnated fibrous preform can optionally be shaped before or after removing the solvent. In some aspects, the curable thermosetting composition layer can further comprise a woven or nonwoven glass fabric. For example, the curable layer can be prepared by impregnating the glass fabric with a curable composition and removing the solvent from the impregnated glass fabric. Exemplary reinforcing structures are described, for example, in Anonymous (Hexcel Corporation), "Prepreg Technology", March 2005, Publication No. FGU 017b; Anonymous (Hexcel Corporation), "Advanced Fibre Reinforced Matrix Products for Direct Processes", June 2005, Publication No. ITA 272; and Bob Griffiths, "Farnborough Airshow Report 2006", CompositesWorld.com, September 2006. The weight and thickness of the reinforcing structure are chosen according to the intended use of the composite using criteria well known to those skilled in the production of fiber reinforced resin composites. The reinforced structure can contain various finishes suitable for the thermosetting components of the curable thermosetting composition.

The method of manufacturing the articles from the curable thermosetting composition can include partially curing the curable thermosetting composition to form a prepreg, or fully curing the curable thermosetting composition to form a composite article. References herein to properties of the "cured composition" refer to a composition that is substantially fully cured. For example, the resin in a laminate formed from prepregs is typically substantially fully cured. One skilled in the thermoset arts can determine whether a sample is partially cured or substantially fully cured without undue experimentation. The curing can be before or after removing the solvent from the curable composition. In addition, the article can be further shaped before removal of the solvent or after removal of the solvent, before curing, after partial curing, or after full curing, for example by thermoforming. In an aspect, the article is formed, and the solvent is removed; the article is partially cured (B-staged); optionally shaped; and then further cured.

Commercial-scale methods of forming composites are known in the art, and the curable thermosetting compositions described herein are readily adaptable to existing processes and equipment. For example, prepregs are often produced on treaters. The main components of a treater include feeder rollers, a resin impregnation tank, a treater oven, and receiver rollers. The reinforcing structure (E-glass, for example) is usually rolled into a large spool. The spool is then put on the feeder rollers that turn and slowly roll out the reinforcing structure. The reinforcing structure then moves through the resin impregnation tank, which contains the curable thermosetting composition. The curable composition impregnates the reinforcing structure. After emerging from the tank, the coated reinforcing structure moves upward through the vertical treater oven, which is typically at a temperature of 175 to 200 °C, and the solvent is evaporated. The resin begins to polymerize at this time. When the composite comes out of the tower it is sufficiently cured so that the web is not wet or tacky. The cure process, however, is stopped short of completion so that additional curing can occur when laminate is made. The web then rolls the prepreg onto a receiver roll.

Electrical and electronic articles including or derived from the curable thermosetting composition are also provided. Articles include those comprising printed circuits as used in medical or aerospace industries. Still other articles include antennae and like articles. Articles such as printed circuit boards are used, for example, in lighting, solar energy, displays, cameras, audio and video equipment, personal computers, mobile telephones, electronic notepads, and similar devices, or office automation equipment. For example, electrical parts can be mounted on printed circuit boards comprising a laminate. Other exemplary articles prepared from the curable composition for various applications can include copper clad laminates (CCL), for example, metal core copper clad laminates (MCCCL), composite articles, and coated articles, for example multilayer articles.

Dielectric layer can be prepared from the curable thermosetting composition can be useful in a circuit assembly, for example, in a metal-clad laminate such as a copper clad laminate. For example, a laminate can comprise a dielectric layer, a conductive metal circuit layer disposed on the dielectric layer, and optionally, a heat dissipating metal matrix layer disposed on the dielectric layer on a side opposite the conductive metal layer. The dielectric layer can optionally include a fibrous preform (e.g., a fabric layer). For example, the dielectric layer can further include a glass fabric layer.

The conductive metal layer can be in the form of a circuit, and can be copper, zinc, tin, brass, chromium, molybdenum, nickel, cobalt, aluminum, stainless steel, iron, gold, silver, platinum, titanium, or the like, or a combination thereof. Other metals include a copper molybdenum alloy, a nickel-cobalt iron alloy such as KOVAR, available from Carpenter Technology Corporation, a nickel-iron alloy such as INVAR, available from National Electronic Alloys, Inc., a bimetal, a trimetal, a trimetal derived from two-layers of copper and one layer of INVAR, and a trimetal derived from two layers of copper and one layer of molybdenum. Exemplary metal layers comprise copper or a copper alloy. Alternatively, wrought copper foils can be used. Conductive metal layers can have a thickness of 2 to 200 micrometers (µm), or 5 to 50 µm, or 5 to 40 µm.

A heat dissipating metal matrix layer can be a thermally conductive metal such as aluminum, boron nitride, aluminum nitride, copper, iron, steel, or the like, or a combination thereof. A thermally conductive, electrically conductive metal can be used provided that the metal is electrically isolated from the metal circuit layer. Preferred supporting metal matrix layers can have a thickness of 0.1 to 20 millimeters (mm), or 0.5 to 10 mm, or 0.8 to 2 mm.

The conductive metal layer and the supporting metal matrix layers can be pretreated to have high surface roughness for enhanced adhesion to the dielectric layer. Treatment methods include washing, flame treatment, plasma discharge, corona discharge, or the like, for example to enhance adhesion of the metal layer. The dielectric layer can adhere firmly to the conductive metal layer or the heat dissipation layer without using an adhesive, or an adhesive can be used to improve adhesion of the dielectric layer to the conductive metal layer or the heat dissipation layer. Exemplary adhesives used to bond the composite sheet to a metal include polyimide adhesives, acrylic adhesives, epoxies, or the like, or a combination thereof.

The copper clad laminates can be made by thermal lamination of one or more dielectric layers, one or more conductive metal layers, and a supporting metal matrix layer, under pressure without using thermosetting adhesives. The dielectric layer can be prepared from the curable thermosetting composition and can be prepared prior to the thermal lamination step by a solvent casting process to form a layer. For example, the dielectric layer, the conductive metal layer, and the thermal dissipation layer can be thermally laminated together by an adhesive-free process under pressure to form a laminate. The electrically conductive metal layer can optionally be in the form of a circuit before laminating, or the conductive metal layer can optionally be etched to form the electrical circuit following lamination. The laminating can be by hot press or roll calendaring methods, for example, a roll-to-roll method. The conductive metal layer in a copper clad laminate can further be patterned to provide a printed circuit board. Furthermore, the copper clad laminates can be shaped to provide a circuit board having the shape of a sheet, a tube, or a rod.

Alternatively, laminates for a circuit assembly can be made by a solution casting method in which the curable thermosetting composition is cast directly onto the electrically conductive metal layer, followed by lamination to the heat dissipating metal matrix layer. For example, the curable thermosetting composition can be cast directly onto the heat dissipating metal matrix layer, followed by lamination to the electrically conductive metal layer.

Multilayer laminates including additional layers can also be made by thermal lamination in one step or in two or more consecutive steps by such processes as hot press or roll calendaring methods. For example, seven layers or fewer can be present in the laminate, or sixteen layers or fewer. In an aspect, a laminate can be formed in one step or in two or more consecutive steps with sequential layers of fabric-thermoset-metal-thermoset-fabric-thermoset-metal foil or a sub-combination thereof with fewer layers, such that the laminate comprises a layer of thermoset film between any layer of metal foil and any layer of fabric. In another aspect, a first laminate can be formed in one step or in two or more consecutive steps with a layer of fabric between two layers of the thermoset, such as a layer of woven glass fabric between two layers of the thermoset. A second laminate can then be prepared by laminating a metal foil to a thermoset side of the first laminate.

Printed circuit boards prepared from the curable thermosetting composition can have an overall thickness of 0.1 to 20 mm, and specifically 0.5 to 10 mm, wherein overall thickness refers to an assembly comprising a layer each of the dielectric layer, the electrically conductive metal layer, and the supporting metal matrix layer. Circuit assemblies can have an overall thickness of 0.5 to 2 mm, and specifically 0.5 to 1.5. There is no particular limitation on the thickness of the dielectric layer and can be 5 to 1500 µm, or 5 to 750 µm, or 10 to 150 µm, or 10 to 100 µm. For example, the printed circuit board can be a metal core printed circuit board (MCPCB) for use in a light emitting diode (LED) application.

The curable thermosetting composition can be used as a coating, for example in the preparation of a multilayer article. A method of manufacturing the coating can include combining the curable thermosetting composition and optionally a fluoropolymer and forming a coating on a substrate. For example, a multilayer article can be manufactured by forming a layer including the curable thermosetting composition, removing the solvent from the layer and optionally curing to provide a primer layer, forming a second layer comprising a ceramic (e.g., Al₂O₃, TiO₂, ZrO₂, Cr₂O₃, SiO₂, MgO, BeO, Y₂O₃, Al₂O₃-SiO₂, MgO-ZrO₂, SiC, WC, B₄C, TiC, Si₃N₄, TiN, BN, AlN, TiB, ZrB₂, or the like), a thermoplastic polymer, a fluoropolymer (e.g., polytetrafluoroethylene, tetrafluoroethylene-perfluoroalkylvinylether copolymers, tetrafluoroethylene-hexafluoropropylene copolymers, polychlorotrifluoroethylene, tetrafluoroethylene-ethylene copolymers, polyvinylidene fluoride, or the like), or a combination thereof on the primer layer to provide the multilayer article, and optionally thermally treating the multilayer article to cure the curable thermosetting composition. In some aspects, the second layer can further include the curable thermosetting composition.

Additional applications for the curable thermosetting compositions include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and flarings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cut-off devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toner resins for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other applications.

Processes useful for preparing the articles and materials include those generally known to the art for the processing of thermosetting resins. Such processes have been described in the literature as in, for example, Engineered Materials Handbook, Volume 1, Composites, ASM International Metals Park, Ohio, copyright 1987 Cyril A. Dostal Senior Ed, pp. 105-168 and 497-533, and "Polyesters and Their Applications" by Bjorksten Research Laboratories, Johan Bjorksten (pres.) Henry Tovey (Ch. Lit. Ass.), Betty Harker (Ad. Ass.), James Henning (Ad. Ass.), Reinhold Publishing Corporation, New York, 1956. Processing techniques include resin transfer molding; sheet molding; bulk molding; pultrusion; injection molding, including reaction injection molding (RIM); atmospheric pressure molding (APM); casting, including centrifugal and static casting open mold casting; lamination including wet or dry lay up and spray lay up; also included are contact molding, including cylindrical contact molding; compression molding; including vacuum assisted resin transfer molding and chemically assisted resin transfer molding; matched tool molding; autoclave curing; thermal curing in air; vacuum bagging; pultrusion; Seeman's Composite Resin Infusion Manufacturing Processing (SCRIMP); open molding, continuous combination of resin and glass; and filament winding, including cylindrical filament winding. For example, an article can be prepared by a resin transfer molding process.

Also provided is an article derived from the curable thermosetting composition, wherein the article is a composite, a foam, a fiber, a layer, a coating, an encapsulant, an adhesive, a sealant, a molded component, a prepreg, a casing, a cast article, a laminate, or a combination thereof; or, wherein the article is a metal clad laminate, an electronic composite, a structural composite, or a combination thereof. Articles can be manufactured as disclosed herein, for example by casting, molding, extruding, or the like, and removing the solvent from the formed article. In some aspects, the article can be a layer, and can be formed by casting the curable composition onto a substrate to form a cast layer. The solvent can be removed by any number of means, including by heating the cast layer, heating the cast layer under heat and pressure, for example by laminating the cast layer to another substrate. In some aspects, articles prepared by the above-described methods can include adhesives, packaging material, capacitor films, or circuit board layers. In some aspects, articles prepared from the curable composition can be a dielectric layer, or a coating disposed on a substrate, for example a wire or cable coating. For example, the article can be a dielectric layer in a circuit material, for example in a printed circuit board, used, for example, in lighting or communications applications. Other exemplary articles prepared from the curable composition can be one or more painted layers. The curable compositions can be used to prepare articles as disclosed herein for other curable thermosetting compositions.

This disclosure is further illustrated by the following examples, which are nonlimiting.

### EXAMPLES

Materials used for the following examples are described in Table 1.

**Table 1**

| Component | Description | CAS# | Supplier |
|---|---|---|---|
| CMP | 2-Methyl-6-cyclohexylphenol | 4855-68-9 | SI Group |
| CP | 2-Cyclohexylphenol | 119-42-6 | Sigma-Aldrich |
| TMBPA | Tetramethyl bisphenol A | 5613-46-7 | Deepak Novachem |
| Cu₂O | Cuprous oxide | 1317-39-1 | American Chemet Corporation |
| HBr | Hydrobromic acid | 10035-10-6 | Chemtura Corporation |
| DBEDA | Di-*tert*-butylethylenediamine | 4062-60-6 | Achiewell LLC |
| DBA | Di-*n*-butylamine | 111-92-2 | Oxea Corporation |
| DMBA | *N*,*N*-Dimethylbutylamine | 927-62-8 | Oxea Corporation |
| PTC-1 | 50 % didecyl dimethyl ammonium chloride in 50 % toluene, available as MAQUAT | 7173-51-5 | Mason Chemical Company |
| NTA | Nitrilotriacetic acid trisodium salt | 5064-31-3 | Akzo Nobel Functional Chemicals LLC |
| DMAP | N,N-Dimethylaminopyridine | 1122-58-3 | Sigma Aldrich |
| MAA | Methacrylic anhdyride | 760-93-0 | Alfa Aesar |
| MEK | Methyl ethyl ketone | 78-93-3 | Fisher Scientific |
| Toluene | - | 108-88-3 | Fisher Scientific |
| Chloroform | - | 67-66-3 | Fisher Scientific |
| TAIC | Triallyl isocyanurate | 1025-15-6 | Acros Organics |
| DTBPIB | Di(tert-butylperoxyisoproyl)benzene, obtained as Perkodax 14S-FL | 25155-25-3 | Akzo Nobel |
| BPBPE | 1,2-Bis(2,3,4,5,6-pentabromophenyl)ethane obtained as Saytex 8010 | 84852-53-9 | Albemarle |
| Silica | Spherical silica | 631-86-9 | Denka |
| TMSPMA | 3-Trimethoxysilyl-propyl-methacrylate | 2530-85-0 | Fisher Scientific |
| PPE-2MA | Bifunctional phenylene ether oligomer comprising 2,6-dimethyl-1,4-phenylene ether repeating units and having methacrylate end groups | | SABIC |

Oxidative coupling polymerization reactions were carried out in a bubbling reactor, a 500 ml jacketed glass reactor charged with an overhead agitator, a thermocouple, nitrogen pad and a dip tube for oxygen bubbling. The derivatization or end capping reaction was carried out in a 500 ml glass reactor equipped with a heating mantle, a dean stark condenser, a thermocouple, and an additional funnel.

Casting of the curable compositions for subsequent curing was carried out using a manual hydraulic press from Specac.

PPE-CMP oligomers were synthesized according to the following procedure. Toluene (42.45 grams), CMP (42.3 grams), TMBPA (5.76 grams), DMBA (4.32 grams), DBA (0.28 grams), and a mixture of DBEDA (0.075 grams), PTA-1 (0.04 grams), and toluene (0.13 grams) were charged to a 500 ml bubbling polymerization vessel and stirred under nitrogen. Catalyst solution (0.02 grams Cu₂O and 0.33 grams of 48% HBr) was added to the above reaction mixture. After the addition of catalyst solution, oxygen flow was started. The temperature was ramped from 25°C to 32°C in 15 minutes, and at 115 minutes it was increased to 49°C. Oxygen flow was maintained for 1500 minutes, at which point the flow was stopped, and 0.46 grams NTA and 5.68 grams water were added to the reaction mixture. The resulting mixture was stirred at 60°C for 2 hours. The layers were separated by centrifugation and the light phase was isolated by removal of toluene. The oligomer was obtained after drying in a vacuum oven at 110°C under nitrogen overnight.

PPE-CMP-2MA oligomers were synthesized according to the following procedure. PPE-CMP oligomer (36 grams) was dissolved in toluene (75 grams) in a 500 ml 3-neck round bottom flask equipped with a heating mantle, dean-stark condenser, agitator and thermocouple. The solution was heated to 120°C to remove water by azeotropic distillation. After the removal of water, the reaction mixture was cooled to 85°C and DMAP (0.36 grams) was added. After complete dissolution of DMAP, MAA (6.63 grams) was added over 20 minutes using an addition funnel. The reaction temperature was raised to 110°C, and the reaction was stirred for 4 hours. PPE-CMP-2MA was isolated by precipitation into methanol. The powder was further dried under vacuum and nitrogen at 110°C overnight.

Curable compositions were prepared by dissolving the PPE-CMP-2MA in chloroform. Chloroform was removed under vacuum and nitrogen until a dried powder was obtained. The dried powder was used for chemorheology and further cured for performance evaluation. Cured castings were prepared by curing the compositions partially (e.g., to the gel time). The partially cured compositions were transferred to a 40 millimeter-diameter die and the die was placed in a hot die press. The samples were cured by increasing the temperature to 150°C under pressure (1 ton). Once the temperature reaches 150°C, the sample was then cooled to 70°C and the die was transferred to an oven and the sample was cured at 200°C for 120 minutes under vacuum.

Compositions were characterized using the following testing procedures.

Nuclear Magnetic Resonance (NMR) Spectroscopy Analysis: The chemical structure and composition of the oligomers were determined by NMR analysis. All ¹H NMR spectra were acquired on a Varian Mercury Plus 400 instrument operating at an observe frequency of 400.14 MHz.

Gel Permeation Chromatography was conducted relative to polystyrene standards and used to determined number average molecular weight (Mn) and weight average molecular weight (Mw).

Solution Viscosity Measurements: DV2+ pro Brookfield viscometer equipped with an UL adaptor for low viscosity materials was used. The measurements were conducted to determine the solution viscosity of the 50 wt.% oligomers in MEK using spindle 00 at 25 °C controlled by a water jacket.

Differential scanning calorimetry (DSC): The glass transition temperatures (Tg) of the oligomers were measured using a TA Instruments differential scanning calorimeter from 25°C to 300°C at a 20 °C/min temperature ramp. The analyses were conducted under nitrogen. All sample weights were in the range of 8 to 11 milligrams. T-zero pans were used.

The heat of exotherm and extent of cure were also determined using DSC with a temperature ramp from 25°C to 300°C at a 10°C/min temperature ramp. All sample weights were in the range of 8 to 11 milligrams. The extent of cure was determined by the ratio of the heat of exotherm from the uncured composition and partially cured (B-stage) composition.

Gel time was measured using an Ares G2 Rheometer from TA Instruments under a nitrogen atmosphere using 25 mm parallel plates with a target gap of 1 mm. An oscillation temperature ramp was used with a starting temperature of 80°C and a ramp rate of 5°C/minute with a constant strain of 30% and an angular frequency of 10 Rad/s.

Viscosity measurements (referred to as "resin flow" in the tables that follow) were carried out using an Ares G2 Rheometer from TA Instruments under a nitrogen atmosphere using 25 mm parallel plates with a target gap of 1 mm. An oscillation temperature ramp was used with a starting temperature of 80°C and a ramp rate of 3°C/minute with a constant strain of 1% and an angular frequency of 10 Rad/s.

Thermal gravimetric analysis (TGA) was carried out to characterize the decomposition of cured samples. A temperature ramp rate of 10°C/min was used starting from 25°C and ramping to 800°C.

Dielectric measurements were conducted using an Agilent Technologies E5071C network analyzer equipped with split post dielectric resonator (SPDR) fixture for the measurements of dielectric constant (Dk) and dissipation factor (Df) at 10 GHz.

Moisture absorption was characterized by placing castings in a water bath at 50°C. Samples were removed from the bath, damp dried, and weights were measured every 24 hours.

### Example 1

PPE-CMP-2MA was prepared according to the above-described synthesis. The structure of the PPE-CMP-2MA was confirmed by solution NMR spectroscopy. ¹H NMR spectroscopy also confirmed that the end groups of the oligomer were methacrylate units resulting in a bi-functional oligomer with an average functionality of 2.

Table 2 shows some of the properties of the PPE-CMP-2MA oligomer of Example 1.

**Table 2**

| Property | Units | Example 1 |
|---|---|---|
| Physical form | -- | powder |
| Average degree of functionality | -- | 2 |
| Tg | °C | 147 |
| Mn | g/mol | 2978 |
| Mw | g/mol | 4752 |
| Solubility, toluene (ambient) | Wt% | >50 |
| Solubility, MEK (ambient) | Wt% | >50 |
| Solution Viscosity (MEK, 25 °C, 50 rpm) | cP | 60 |

Curable compositions were prepared according to Table 3. The rheological and curing behavior of the formulations was measured following solvent removal. Performance of the cured materials are also shown in Table 3. The performance of the composition comprising the oligomer of Example 1 was compared to a bifunctional PPE-methacrylate oligomer comprising repeating units derived from 2,6-dimethylphenol (shown as Comparative Example 1).

**Table 3**

| Component | Units | Example 2 | Comparative Example 1 |
|---|---|---|---|
| PPE-CMP-2MA (from Example 1) | Wt% | 68 | |
| PPE-2MA | Wt% | | 68 |
| TAIC | Wt% | 29 | 29 |
| DTBPIB | Wt% | 3 | 3 |
| Properties | | | |
| Heat of Exotherm | J/g | 177 | 204 |
| Gel Time | Seconds | 800 | 485 |
| Resin Flow (before B-stage) | Pa-s | 22.20 ± 0.19 | 273 |
| Resin Flow (after B-stage) | Pa-s | 6569 ± 233 | 1566 4 |
| Extent of Cure | % | | |
| Tg | °C | 197 | 225 |
| Onset Decomposition Temperature | °C | 455 | 469 |
| Dielectric Constant | -- | 2.57±0.0072 | 2.83±0.03 |
| Dissipation Factor x10³ | -- | 3.58±0.023 | 5.75±0.083 |
| Equilibrium Water Absorption | Wt% | 0.54 | 0.79 |

**Table 4**

| Component | Units | Example 3 | Comparative Example 1 |
|---|---|---|---|
| PPE-CMP-2MA (from Example 1) | Wt% | 49 | |
| PPE-2MA | Wt% | | 49 |
| TAIC | Wt% | 21 | 21 |
| DTBPIB | Wt% | 2 | 2 |
| BPBPE | Wt% | 8 | 8 |
| Silica | Wt% | 20 | 20 |
| TMSPMA | Wt% | 0.3 | 0.3 |
| Properties | | | |
| Heat of Exotherm | J/g | 177 | 204 |
| Gel Time | Seconds | 786 | 446 813 |
| Resin Flow (before B-stage) | Pa-s | 17 | 273 |
| Resin Flow (after B-stage) | Pa-s | 8185.7 | 1566 4 |
| Extent of Cure | % | 10 | 9.1 |
| Tg | °C | 198 | 228 |
| Dielectric Constant | -- | 2.70±0.021 | 2.83±0.03 |
| Dissipation Factor x10³ | -- | 3.34±0.0 3 | 5.75±0.083 |
| Onset Decomposition Temperature | °C | 390 | 400 |
| Equilibrium Water Absorption | Wt% | 0.54 | 0.79 |

As shown in Table 3, the PPE-CMP-2MA oligomer exhibited an improvement in dielectric performance. Thus the materials described herein are considered to be well-suited for use in electronic materials, specifically prepreg laminates and metal clad laminates for printed circuit boards.

### Comparative Example 2

CP-PPE oligomers were synthesized according to the following procedure for comparison to the CMP-PPE oligomers described above. Toluene (168 grams), CP (49 grams), TMBPA (6.40 grams), DMBA (1.68 grams), DBA (0.56 grams), and a mixture of 0.088 grams DBEDA, 0.047 grams PTC-1, and 0.15 grams toluene were charged to a 500 milliliter bubbling polymerization vessel and stirred under nitrogen. Catalyst solution (0.42 grams; 0.03 grams Cu₂O and 0.39 grams (48%) HBr) was added to the above reaction mixture. After the addition of catalyst solution, oxygen flow was started. The temperature was ramped from 25°C to 39.4°C in 15 minutes, and at 70 minutes it was increased to 48.9°C. Oxygen flow was maintained for 130 minutes, at which point the flow was stopped, and 1.0 grams NTA and 6.0 grams water were added to the reaction mixture. The resulting mixture was stirred at 60°C for 2 hours. The layers were separated by centrifugation and the light phase was isolated by precipitation into methanol. The precipitated particles were filtered and analyzed after drying in a vacuum oven at 110°C under nitrogen overnight.

The CP-PPE oligomers were characterized by ¹H and ³¹P NMR spectroscopy. All ¹H NMR spectra were acquired on an Agilent DD2 600 instrument operating at an observe frequency of 599.90 MHz. Spectra for all samples were collected under quantitative conditions. Approximately 30 mg 2-cycloheyl phenol final ppt sample were added to 1 milliliter 1,1,2,2-tetrachloroethane-d₂. Spectral parameters included a 9615 Hz spectral width, 1.7 s acquisition time (16 K data points), 4.20 µs pulse width (45° flip angle), and 15 s pulse delay. The s2pul pulse sequence was employed. Typically, 32 acquisitions were adequate to achieve good signal-to-noise. Data processing was carried out using NetNMR software with 0.25 Hz line broadening and a polynomial baseline correction routine.

³¹P-NMR spectroscopy was used for the identification and quantification of phenolic functionality in various polymer samples. This technique involves the derivatization of the polymer phenolic residues with 2-chloro-1,3,2-dioxaphospholane. This reaction produces a variety of structurally similar 2-aryloxy-1,3,2-dioxaphospholanes differing only in aromatic ring substitution. Because of the sensitivity of the ³¹P-nucleus to its electronic environment, various phenolic endgroups can be identified from ³¹P-chemical shifts of their corresponding phosphate derivatives. In addition to phenolic endgroups, this method can also quantify alcohol and acidic functionalities in many resins. Through the use of the internal standard, 2,4-dibromophenol, quantification of the hydroxyl end-group functionality of polymeric resins can be determined.

All spectra were acquired on an Agilent DD2 600 spectrometer operating at 242.84 MHz for ³¹P. The instrument was equipped with a 5mm OneNMR^{™} PFG probe. Approximately 80mg of sample were dissolved in 4.0 ml of chloroform-d containing 0.95mg/ml 2,4-dibromophenol (internal standard) and 15mg/ml Cr(acac)₃ (T1 relaxation enhancement reagent to reduce data acquisition times). In addition, pyridine is added as an acid scavenger at 1ml pyridine per 100ml CDCl₃ internal standard stock solution. Record sample and internal standard weights to four decimal places. The decoupler was gated off during the pulse delay to eliminate NOE and to ensure complete relaxation of phosphorus nuclei between scans. Acquisition parameters included a pulse delay of 3s and a 45° flip angle. Also, a 23.6 kHz spectral width (100 to 200 ppm region) and 32 K data points resulted in a 1.39s acquisition time. Typically, 1024 scans were required for adequate signal-to-noise. Broadband proton decoupling was carried out using the Waltz-16 pulse sequence. The internal standard, 2,4-dibromo-phenol signal was used as a chemical shift reference (δ =130.24ppm). Resulting spectra were processed using 1 Hz exponential apodization and were baseline corrected using a polynomial fit routine. All data processing was done using NetNMR software.

The cyclohexyl phenol and tetramethyl bisphenol A copolymer (CP-PPE) was synthesized by oxidative coupling polymerization, as described above. The material was precipitated to remove unreacted monomers for better structure analysis. NMR spectroscopy was used to determine the chemical structure. The residual amount of monomer was determined by ³¹P NMR. The branching at unsubstituted 6- position was confirmed via ¹H NMR spectroscopy based on the number of protons in the aromatic ring. If linear polymers were obtained the number of protons should be 3 however, it was determined as 2.5. Thus the CP-PPE oligomers exhibited a branched structure.

This disclosure further encompasses the following aspects.
Aspect 1: A linear bifunctional phenylene ether oligomer comprising repeating units derived from 2-methyl-6-cyclohexylphenol and having (meth)acrylate end groups.
Aspect 2: The bifunctional phenylene ether oligomer of aspect 1, wherein the phenylene ether oligomer comprises less than 30 weight percent of repeating units derived from a monohydric phenol having identical substituents in the 2- and 6- positions.
Aspect 3: The phenylene ether oligomer of aspect 1 or 2, wherein the repeating units derived from 2-methyl-6-cyclohexylphenol are of the structure 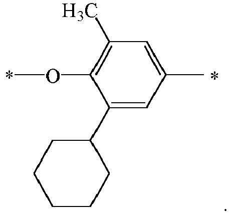
Aspect 4: The phenylene ether oligomer of any of aspects 1 to 3, wherein the phenylene ether oligomer is of the structure 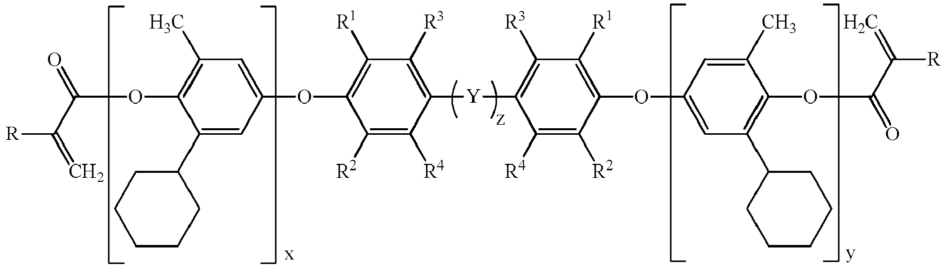 wherein R is methyl or hydeogen; x and y are independently 0 to 30, provided that the sum of x and y is at least 2; each occurrence of R¹, R², R³, and R⁴ independently comprises hydrogen, halogen, unsubstituted or substituted C₁-₁₂ primary or secondary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms; z is 0 or 1; Y has a structure comprising 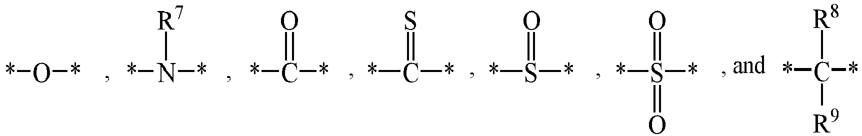 wherein each occurrence of R⁷ independently comprises hydrogen and C₁-₁₂ hydrocarbyl, and each occurrence of R⁸ and R⁹ is each independently hydrogen, C₁-₁₂ hydrocarbyl, or C₁-₆ hydrocarbylene wherein R⁸ and R⁹ collectively form a C₄-₁₂ alkylene group; preferably wherein each occurrence of R¹ and R² is methyl, each occurrence of R³ and R⁴ is hydrogen, z is 1, and Y is an isopropylidene group.
Aspect 5: A method of making the linear bifunctional phenylene ether oligomer of any of aspects 1 to 4, the method comprising oxidatively polymerizing 2-methyl-6-cyclohexyl phenol in the presence of a catalyst to provide a phenylene ether oligomer; and reacting the phenylene ether oligomer with a (meth)acrylate-containing compound to provide the linear bifunctional phenylene ether oligomer.
Aspect 6: The method of aspect 5, wherein the oxidatively polymerizing is further in the presence of a bisphenol, preferably tetramethyl bisphenol A.
Aspect 7: A curable thermosetting composition comprising the linear bifunctional phenylene ether oligomer of any of aspects 1 to 4.
Aspect 8: The curable thermosetting composition of aspect 7, further comprising one or more of a crosslinking agent, a curing agent, a curing catalyst, a curing initiator, or a combination thereof.
Aspect 9: The curable thermosetting composition of aspect 7 or 8, further comprising one or more of a flame retardant, a filler, a coupling agent, or a combination thereof.
Aspect 10: A cured thermoset composition, comprising a cured product of the curable thermosetting composition of any one or more of aspects 7 to 9, preferably wherein the thermoset composition has a glass transition temperature of greater than or equal to 165°C, preferably greater than or equal to 170°C, more preferably 165 to 180°C, as determined using differential scanning calorimetry; wherein the thermoset composition has a dielectric constant of less than 3.0, preferably less than 2.75, more preferably less than 2.6 at a frequency of 10 GHz; and wherein the thermoset composition has a dissipation factor of less than 0.01, or less than 0.005 at a frequency of 10 GHz.
Aspect 11: A method for the manufacture of the cured thermoset composition of aspect 10, the method comprising curing the curable thermosetting composition, preferably at a temperature of 50 to 250 °C.
Aspect 12: An article comprising the cured thermoset composition of aspect 10, preferably wherein the article is a composite, a foam, a fiber, a layer, a coating, an encapsulant, an adhesive, a sealant, a molded component, a prepreg, a casing, a cast article, a laminate, or a combination thereof; or wherein the article is a metal clad laminate, an electronic composite, a structural composite, or a combination thereof.
Aspect 13: A varnish composition, comprising the curable thermosetting composition of any one of aspects 7 to 9; and a solvent.
Aspect 14: An article manufactured from the varnish composition of aspect 13, preferably wherein the article is a fiber, a layer, a coating, a cast article, a prepreg, a composite, a laminate, or a metal clad laminate.
Aspect 15: A method for the manufacture of the article of aspect 14, comprising impregnating the varnish composition into a substrate to form a prepreg; and curing the varnish composition.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein and may or may not be present in other aspects. The term "combination thereof' as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁-₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂-₁₂ alkenyl, a C₅₋₁₂ cycloalkenyl, a C₆₋₁₂ aryl, a C₇₋₁₃ arylalkylene, a C₄-₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example - CH₂CH₂CN is a C₂ alkyl group substituted with a nitrile.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A linear bifunctional phenylene ether oligomer comprising repeating units derived from 2-methyl-6-cyclohexylphenol and having (meth)acrylate end groups.

2. The bifunctional phenylene ether oligomer of claim 1, wherein the phenylene ether oligomer comprises less than 30 weight percent of repeating units derived from a monohydric phenol having identical substituents in the 2- and 6- positions.

3. The phenylene ether oligomer of claim 1 or 2, wherein the repeating units derived from 2-methyl-6-cyclohexylphenol are of the structure

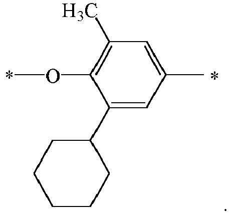

4. The phenylene ether oligomer of any of claims 1 to 3, wherein the phenylene ether oligomer is of the structure 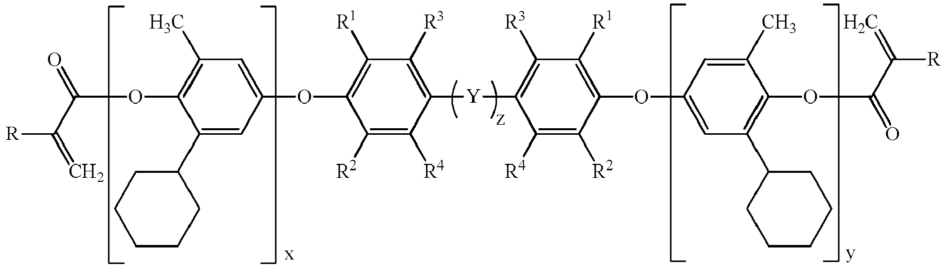 wherein
R is methyl or hydrogen;
x and y are independently 0 to 30, provided that the sum of x and y is at least 2;
each occurrence of R¹, R², R³, and R⁴ independently comprises hydrogen, halogen, unsubstituted or substituted C₁-₁₂ primary or secondary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms;
z is 0 or 1;
Y has a structure comprising 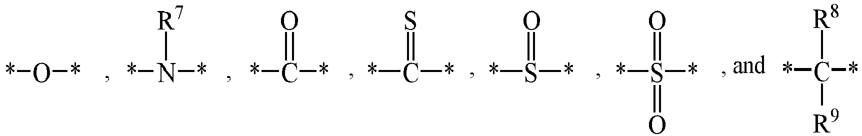 wherein each occurrence of R⁷ independently comprises hydrogen and C₁-₁₂ hydrocarbyl, and each occurrence of R⁸ and R⁹ is each independently hydrogen, C₁-₁₂ hydrocarbyl, or C₁-₆ hydrocarbylene wherein R⁸ and R⁹ collectively form a C₄-₁₂ alkylene group;
preferably wherein each occurrence of R¹ and R² is methyl, each occurrence of R³ and R⁴ is hydrogen, z is 1, and Y is an isopropylidene group.

5. A method of making the linear bifunctional phenylene ether oligomer of any of claims 1 to 4, the method comprising
oxidatively polymerizing 2-methyl-6-cyclohexyl phenol in the presence of a catalyst to provide a phenylene ether oligomer; and
reacting the phenylene ether oligomer with a (meth)acrylate-containing compound to provide the linear bifunctional phenylene ether oligomer.

6. The method of claim 5, wherein the oxidatively polymerizing is further in the presence of a bisphenol, preferably tetramethyl bisphenol A.

7. A curable thermosetting composition comprising
the linear bifunctional phenylene ether oligomer of any of claims 1 to 4.

8. The curable thermosetting composition of claim 7, further comprising one or more of a crosslinking agent, a curing agent, a curing catalyst, a curing initiator, or a combination thereof.

9. The curable thermosetting composition of claim 7 or 8, further comprising one or more of a flame retardant, a filler, a coupling agent, or a combination thereof.

10. A cured thermoset composition comprising a cured product of the curable thermosetting composition of any one or more of claims 7 to 9.

11. A method for the manufacture of the cured thermoset composition of claim 10, the method comprising curing the curable thermosetting composition, preferably at a temperature of 50 to 250 °C.

12. An article comprising the cured thermoset composition of claim 10,
preferably
wherein the article is a composite, a foam, a fiber, a layer, a coating, an encapsulant, an adhesive, a sealant, a molded component, a prepreg, a casing, a cast article, a laminate, or a combination thereof; or
wherein the article is a metal clad laminate, an electronic composite, a structural composite, or a combination thereof.

13. A varnish composition, comprising
the curable thermosetting composition of any one of claims 7 to 9; and
a solvent.

14. An article manufactured from the varnish composition of claim 13, preferably wherein the article is a fiber, a layer, a coating, a cast article, a prepreg, a composite, a laminate, or a metal clad laminate.

15. A method for the manufacture of the article of claim 14, comprising impregnating the varnish composition into a substrate to form a prepreg; and curing the varnish composition.
